# EUROPEAN PATENT APPLICATION

(11) **EP 2 017 202 A1**
(43) Date of publication of application: **21.01.2009**
(21) Application number: 08168863.2
(22) Date of filing: 09.09.2005
(51) Int. Cl.: B65G 47/80, B65G 47/84, B29C 45/72, B29C 49/36

(54) **Method for moving objects**

(30) Priority: 01.03.2005 IT MO20050048
(62) Divisional of application: 05788807.5
(71) Applicant: SACMI COOPERATIVA MECCANICI IMOLA SOCIETA' COOPERATIVA, 40026 Imola (BO) (IT)
(72) Inventor: Parrinello, Fiorenzo, 40059, Medicina (BO) (IT); Balboni, Alessandro, 40057, Granarolo dell'Emilia (BO) (IT); Borgatti, Maurizio, 40026, Imola (BO) (IT)
(74) Representative: Crugnola, Pietro

(57) **Abstract**

A method comprising providing a rotatable carousel (5) and rotating said carousel (5), wherein during said rotating arranging an object (16; 28; 40) in a conveying unit (170) is provided, said conveying unit (170) being associated with said carousel (5) and movable in relation to said carousel (5), and further arranging a further object (16; 28; 40) in a further conveying unit (170) is provided, said further conveying unit (170) being associated with said carousel (5) and movable in relation to said carousel (5), said arranging comprising positioning a first object (16; 28; 40) in a first operating element (4; 29; 58) of a plurality of operating elements associated with said conveying unit (170) and said further arranging comprising further positioning a further first object (16; 28; 40) in a further first operating element (4; 29; 58) of a further plurality of operating elements associated with said further conveying unit (170), after said arranging, moving said conveying unit (170) being provided, after said moving associating a second object (16; 28; 40) to a second operating element (4; 29; 58) of said plurality of operating elements being provided.

## Description

The invention relates to apparatuses and methods for moving objects, in particular apparatuses and methods for moving objects through a rotatable carousel provided with operating means arranged for interacting with the above-mentioned objects.

The apparatuses and the methods can be used, inter alia, in the field of moulding objects made of plastics, in the field of cooling objects made of plastics after the moulding thereof, in the field of labelling objects, in the field of filling of containers, in the field of applying caps to containers, in the field of decorating objects and in the field of thermal treatment/conditioning of objects.

Apparatuses are known for moulding objects made of plastics comprising a carousel rotatable around a rotation axis and peripherally provided with a plurality of moulds arranged in such a way as to be angularly equidistant.

Each mould comprises a die and a punch that are movable towards, and away from, each other parallel to the rotation axis of the carousel.

Each die is provided with a cavity into which a dose of pasty plastics is introduced that is compressed by the respective punch.

Once a dose of plastics has been introduced inside the mould the latter is closed to obtain moulding of an object.

The mould is kept closed for a certain period of time in such a way that the shape of the object stabilises whereas the carousel is rotated.

The stabilizing step of the shape requires considerable time and occurs whilst the carousel travels along a rotation angle that is greater than the rotation angle travelled by the carousel during the extracting step of the moulded objects and the inserting step of a dose.

The known apparatuses comprise a dose inserting zone and an objects removing zone, which zones are arranged near to each other, in such a way that a dose - and the object obtained therefrom - perform a rotation substantially corresponding to a complete revolution of the carousel.

This enables the time to be maximised that the object spend on the carousel, in order to extend as much as possible the shape stabilizing step.

Known carousels have considerable dimensions in such a way as to be able to house a great quantity of moulds so that the time required for a complete rotation of the carousel around the axis thereof is sufficient to enable suitable cooling of the moulded objects.

Nevertheless, such carousels, owing to their considerable dimensions, result in significant overall dimensions.

An object of the invention is to improve the systems for transferring objects.

A further object is to obtain apparatuses having limited overall dimensions that are able to move objects by means of rotatable carousels.

A further object is to obtain apparatuses comprising rotatable carousels for moving objects that have high productivity and enable objects to be retained on the rotatable carousels for considerable periods.

In a first aspect of the invention, an apparatus is provided, comprising carousel means, operating devices associated with said carousel means and arranged for interacting with objects and conveying units supported by said carousel means and movable in relation to said carousel means to transfer said objects, characterised in that each of said conveying units supports a plurality of said operating devices.

Owing to this aspect of the invention, it is possible to obtain an apparatus having high productivity that results in small overall dimensions.

The apparatus in fact enables a plurality of objects to be treated without it being necessary to provide a rotatable carousel having a great diameter.

This enables the spaces to be limited that are necessary for installing the apparatus.

Owing to this aspect of the invention it is furthermore possible to keep an object on a rotatable carousel for a considerable time without the rotation speed of the carousel having to be decreased, causing a limitation to the productivity of the apparatus.

In a second aspect of the invention, an apparatus is provided comprising rotatable carousel means, operating means associated with said carousel means and arranged for interacting with objects and moving means arranged for transferring said objects to, and/or removing said objects from, said carousel means, characterised in that said moving means comprises flexible moving means.

The flexible moving means is arranged along the trajectory travelled by the operating means in such a way that the interaction between the flexible moving means and the operating means occurs over a significantly long time.

On the other hand, in the apparatuses according to the prior art, in which the moving means comprises further carousel means, the interaction between the carousel means and the further carousel means occurs only at their tangent point.

In a third aspect of the invention, an apparatus is provided, comprising rotatable carousel means, operating units associated with said carousel means and arranged for interacting with objects, receiving elements associated with said carousel means and arranged for receiving said objects coming from, or directed to, said operating units, wherein said receiving elements are more numerous than said operating units.

As the receiving elements are more numerous than the operating units, an object can be removed from an operating unit and be deposited in a receiving element and be kept there whilst the carousel means performs a plurality of rotations around a rotation axis thereof.

Owing to the invention it is thus possible to obtain an apparatus in which an object can be kept on the carousel means for a considerable time during which said object can be subjected to operations required by the working cycle, such as, for example, a cooling and shape stabilizing step if the object has been formed by compressing of plastics.

It is furthermore possible to keep apparatus productivity quite high without it being necessary to increase rotation speed of the carousel means, which, as specified above, enables objects to remain on the carousel means for long periods.

In a fourth aspect of the invention, an apparatus is provided, comprising rotatable carousel means, operating means associated with said carousel means and arranged for interacting with objects, actuating means arranged for moving said operating means between an open position and a closed position, maintaining means arranged for maintaining said operating means in said closed position, characterised in that said actuating means is shaped in such a way as to act along a longitudinal axis of said operating means.

Owing to this aspect of the invention, it is possible to limit the extent of the mechanical stresses to which the operating means are subjected.

It is furthermore possible to obtain an apparatus in which a single actuating element has been provided that is suitable for driving in sequence a plurality of operating means associated with the carousel means. The actuating element shifts the operating means from the open position to the closed position, but it is not necessary for maintaining the operating means in the closed position.

In a fifth aspect of the invention, an apparatus is provided, comprising carousel means, conveying unit means supported by said carousel means and movable in relation to said carousel means to transfer objects and driving means arranged for moving said conveying unit means in relation to said carousel means, characterised in that said driving means comprises cam driving means.

Owing to this aspect of the invention, it is possible to drive the conveying unit means in a controlled manner and with great repeatability.

It is furthermore possible to obtain rather a cheap apparatus inasmuch as if the conveying unit means comprises a plurality of conveying units it is not necessary to provide an independent driving device for each conveying unit.

In a sixth aspect of the invention, an apparatus is provided, comprising carousel means, arm means slidingly coupled with said carousel means and removing means rotatably supported by said arm means and arranged for interacting with objects, cam driving means arranged for moving said arm means in relation to said carousel means and further cam driving means arranged for moving said removing means in relation to said arm means.

Owing to this aspect of the invention, it is possible to obtain an apparatus that enables objects to be deposited in, or removed from, operating units provided on a transferring device, in particular on the periphery of a rotatable carousel.

The first cam means and the second cam means in fact enable the removing means to travel a trajectory, a portion of which substantially coincides with a further trajectory travelled by the operating units provided on the rotatable carousel.

In this way it is possible to obtain a period of time that is of significant length during which an object may be delivered to, or removed from, an operating unit of the rotatable carousel.

On the other hand, in prior-art apparatuses, the removing means interacts with the operating units only when the respective trajectories are tangent.

In a seventh aspect of the invention, a method is provided comprising providing a rotatable carousel and rotating said carousel, in which, during said rotating, arranging an object in a conveying unit is provided that is associated with said carousel and is movable in relation to said carousel and further arranging a further object in a further conveying unit associated with said carousel and mobile in relation to said carousel.

In a version, the aforementioned conveying unit comprises a further carousel and the aforementioned further conveying unit comprises a still further carousel.

During a first complete rotation of the carousel around an axis thereof, a first object is positioned in a first seat obtained on the further carousel and a second object is positioned in a further first seat obtained on the still further carousel.

During a second complete rotation of the carousel around the axis thereof, a third object is positioned in a second seat obtained on the further carousel and a fourth object is positioned in a further second seat obtained on the still further carousel.

The positioning step of the objects may continue until all the seats obtained in the further carousel and in the still further carousel have received an object.

The first object is successively removed from the first seat of the further carousel, to enable a new object to be inserted only after the carousel has performed a number of revolutions around a rotation axis thereof, which number is equal to the number of seats obtained in the further carousel.

Owing to this aspect of the invention, it is possible to obtain a method for moving objects that enables an object to be maintained on a carousel for a considerable time.

In particular, in the case of apparatuses for moulding objects, a formed object is kept on the carousel, inside the respective forming mould, for a time that is sufficient that the shape is suitably stabilised.

Similarly, in the case of apparatuses for cooling objects, in particular of preforms of containers obtained by moulding of plastics, each preform can be kept inside a cooling device, during rotation of the carousel, for sufficient time to enable the preform to acquire the required dimensional stability, without extended phenomena of crystallisation of the plastics occurring, that could jeopardise the transparency of a bottle subsequently obtained from the preform.

In an eighth aspect of the invention, a method is provided comprising providing a rotatable carousel that supports a conveying unit movable in relation to said carousel and a further conveying unit mobile in relation to said carousel, said conveying unit and said further conveying unit being provided with a plurality of operating units arranged for interacting with objects, arranging an object in each operating unit of said conveying unit and subsequently further arranging a further object in each operating unit of said further conveying unit.

In an embodiment, the aforementioned conveying unit comprises a further carousel and the aforementioned further conveying unit comprises a still further carousel.

Between said arranging and said further arranging rotating the aforementioned carousel is provided to move the further carousel away from an object supplying device and take the still further carousel to the object supplying device.

The above-mentioned rotating may comprise rotating by one angular step the aforementioned carousel.

The further carousel and the still further carousel may rotate continuously or may be angularly indexed in relation to the aforementioned carousel.

Owing to this aspect of the invention, it is possible to obtain a method that enables a plurality of objects to be inserted into operating units at very close intervals of time, this method furthermore ensuring a longer interval of time between the supplying of a conveying unit bearing a group of operating units and the supplying of a further conveying unit bearing a further group of operating units.

In particular, in the case of an apparatus for filling containers with a product, the containers positioned on the further carousel may be filled one after the other at very short intervals of time through a supplying device arranged in a fixed position in relation to a further carousel.

Subsequently, during a further interval of time, that is longer than the aforementioned intervals of time, whilst the carousel rotates by one angular step, the supplying device is filled with a quantity of product sufficient to fill the containers associated with the still further carousel.

In a ninth aspect of the invention, a method is provided, comprising rotating driving carousel means in a rotating direction, with said carousel means conveying unit means being associated that is movable in relation to said carousel means and is provided with housing means arranged for receiving objects, transferring said objects between said housing means and conveying means arranged for conveying said objects, said transferring being provided in a zone in which said conveying means interacts with said carousel means, moving said housing means, near to said zone, in an advancing direction substantially opposite said rotating direction.

Owing to this aspect of the invention, as the advancing direction of the housing means is substantially opposite the rotating direction of the carousel means in the zone in which the conveying means interacts with the carousel means, it is possible to obtain an increase in the time during which the conveying means interacts with the carousel means to remove an object from or deliver an object to a housing.

In other words, during the above-mentioned transferring, each housing performs a shift in which two distinct components can be identified. A first component, given by the carousel means, that shifts the housing away from the conveying means, and a second component, given by the conveying unit means, that shifts the housing to the conveying means.

The invention can be better understood and implemented with reference to the enclosed drawings that show some exemplifying and non-limitative embodiments thereof, in which:
Figure 1 is a schematic plan view of an apparatus for moving objects made according to the prior art;
Figure 2 is a schematic plan view of an apparatus for moving objects;
Figure 3 is a schematic plan view of the apparatus in Figure 2, made according to a version;
Figure 4 is a view like the one in Figure 3, showing another version of the apparatus;
Figure 5 is a schematic section taken along a plane V-V of Figure 4, showing conveying unit means rotatably supported on carousel means;
Figure 6 is a view like the one in Figure 3, showing a further version of the apparatus;
Figure 7 is a schematic section taken along a plane VII-VII di Figure 6;
Figure 8 is a view like the one in Figure 3, showing a still further version of the apparatus;
Figure 9 is a schematic section taken along a plane IX-IX di Figure 8;
Figure 10 is a view like the one in Figure 2, showing a still further version of the apparatus;
Figure 11 is an enlarged and fragmentary schematic plan view, showing a still further version of the apparatus;
Figure 12 is a view like the one in Figure 2, showing a further version of the apparatus;
Figure 13 is a plan view of a transferring device cooperating with the apparatus in Figure 2;
Figure 14 is an enlarged detail of Figure 13;
Figure 15 is a view like the one in Figure 14 showing cam elements with which the device is provided;
Figure 16 is a view like the one in Figure 14 showing another embodiment of the device;
Figure 17 is a view like the one in Figure 14 showing a further embodiment of the device;
Figure 18 is a view like the one in Figure 14 showing a still further embodiment of the device;
Figure 19 is a schematic plan view showing a further version of the apparatus;
Figure 20 is a detail of Figure 19;
Figure 21 is a partially sectioned side view of Figure 19;
Figure 22 is an enlarged detail of Figure 19;
Figure 23 is a perspective view of an object that is handled by the apparatus;
Figure 24 is a view like the one in Figure 2, showing a further version of the apparatus provided with carousel transferring means;
Figure 25 is an enlarged and fragmentary detail of Figure 24;
Figure 26 is a fragmentary perspective view of a further embodiment of the carousel transferring means;
Figure 27 is a schematic plan view of the carousel transferring means in Figure 26;
Figure 28 is a further schematic plan view of the carousel transferring means in Figure 26;
Figure 29 is a plan view of an upper plate of the carousel transferring means in Figure 26;
Figure 30 is a partially sectioned schematic side view of a mould for compression moulding of plastics;
Figure 31 is a partially sectioned schematic side view of a device for thermal conditioning of preforms of containers made of plastics;
Figure 32 is a partially sectioned schematic side view of a mould for blow-moulding containers from preforms;
Figure 33 is a partially sectioned schematic side view, of an apparatus for driving operating units between an open position and a closed position and for maintaining operating units in the closed position;
Figure 34 is a partially sectioned schematic side view, of a version of the apparatus for driving operating units that shows the apparatus in a working configuration;
Figure 35 is a view like the one in Figure 34 that shows the apparatus in another working configuration;
Figure 36 is a partially sectioned schematic side view of a further version of the apparatus for driving operating units;
Figure 37 is a side view of a rotating device of carousel means rotatably supported by a carousel.
Figure 38 is a section taken along a plane XXXVIII-XXXVIII in Figure 37;
Figure 39 is a section taken along a plane XXXIX-XXXIX in Figure 38;
Figure 40 is a schematic plan view of a cam with which the device is provided;
Figure 41 is a view like the one in Figure 37, showing a further cam with which the device is provided;
Figure 42 is a schematic plan view of disc means of the driving device provided with rolling elements cooperating with track means for preventing rotation of said disc means. With reference to Figure 1, a machine 1 of the known type for moulding objects, for example caps or preforms of containers, by compression of plastics is shown schematically.

The machine 1 comprises a carousel support 3 that is rotatable around a rotation axis A thereof and is provided with a plurality of moulds 4 distributed over angular intervals of constant degree along a peripheral zone of the carousel support 3.

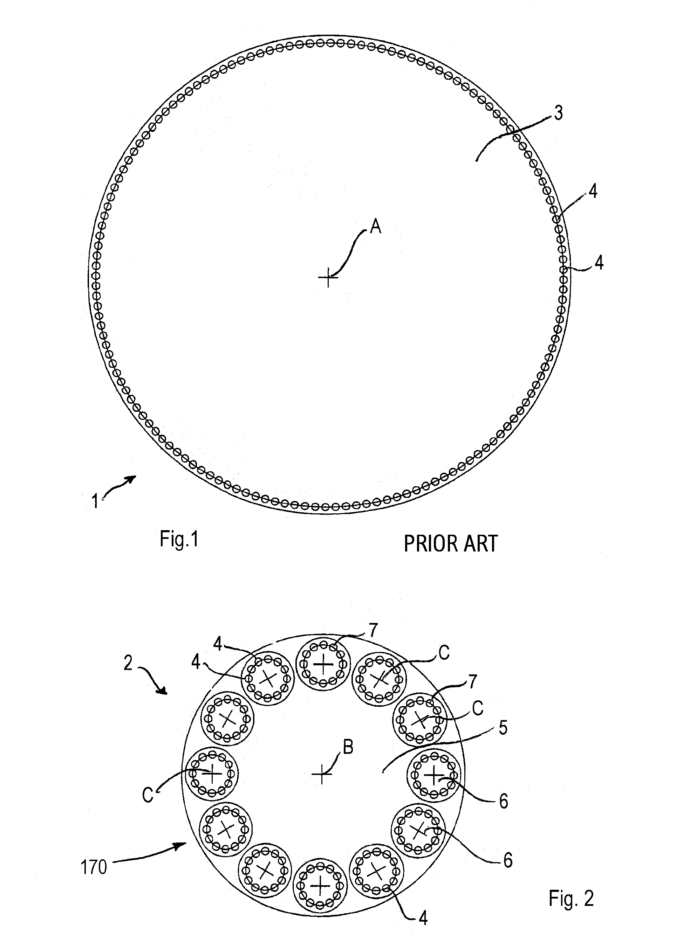

With reference to Figure 2, an apparatus 2 comprising a carousel 5 is shown, which carousel 5 is rotatable around a rotation axis B, on which a plurality of conveying units 170 is provided rotatably supported thereupon.

The conveying units 170 may comprise a plurality of further carousels 6 rotatably supported on the carousel 5 and rotating around respective further rotation axes C.

The carousel 5 can be angularly indexed or continuously rotated.

Similarly, also each of the further carousels 6 can be angularly indexed or continuously rotated.

Each of the further carousels 6 is provided with a plurality of housings 7, arranged at preferably constant angular intervals on the periphery of the further carousels 6, at which operating means can be assembled, such as, for example, the moulds 4.

It should be noted that, for the same number of moulds 4, the dimensions of the apparatus 2 are considerably reduced in relation to the dimensions of the machine 1.

The apparatus 2 thus enables the same productivity of the machine 1 to be obtained with a noticeably smaller space requirement.

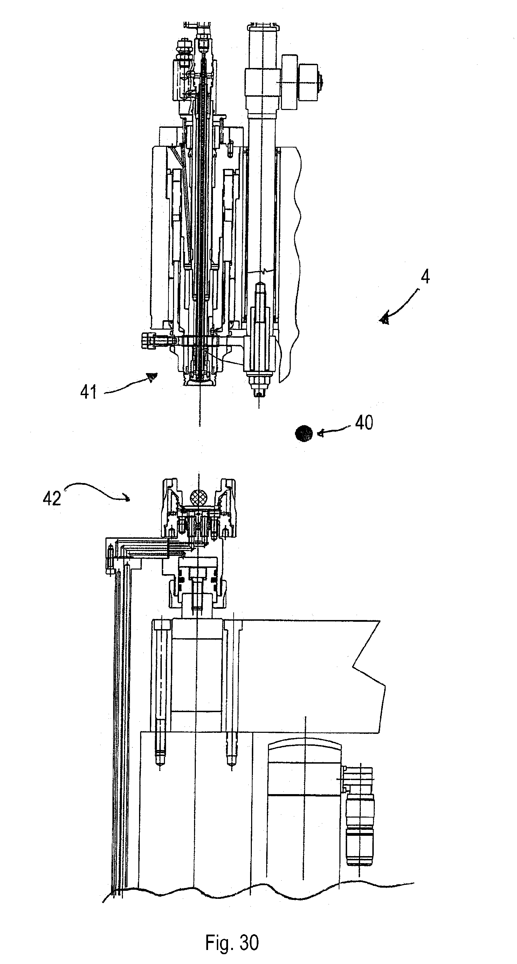

During a complete revolution of the carousel 5, a dose 40 is deposited (Figure 30) in a mould 4 of each of the further carousels 6, in particular a first dose is inserted into a first mould of a first further carousel 6.

During a subsequent revolution of the carousel 5, a further dose 40 is deposited in a further mould of each of the further carousels 6.

This operation is repeated until all the moulds have been supplied with doses 40.

At this point, a moulded object is removed from the first mould of the first further carousel to enable a still further dose to be inserted into the first mould.

It is observed that the dose 40 and the object obtained therefrom are kept inside the first mould for a number of revolutions of the carousel 5 equal to the number of the moulds provided in each of the further carousels 6.

The foregoing exposition indicates that the apparatus 2 enables a cooling and shape stabilising step of the moulded objects to be achieved that has a very long duration, for example substantially the same as that of a corresponding cooling and shape stabilising step that is obtainable with the machine 1, although resulting, for the same productivity, in decidedly smaller overall dimensions.

In an embodiment that is not shown, the further carousels 6 can be positioned substantially radially on the carousel 5.

In this case, the further rotation axes C are arranged substantially parallel to the main carousel 5, the further carousels 6 being arranged along diametral planes of the carousel 5.

In this way, by providing further carousels 6 provided with a longitudinal dimension that is much less than a transverse dimension - i.e. further carousels 6 provided with a thickness that is lesser than the diameter thereof - it is possible to install rather a significant number of further carousels 6 on the carousel 5 enabling the carousel 5, for the same dimensions, to receive a considerably greater number of objects compared with the case of further carousels having the further rotation axis C substantially parallel to the rotation axis B.

In another embodiment that is not shown, the further carousels 6 may be arranged in such a way that the respective further rotation axes C are positioned substantially radially in relation to the carousel 5.

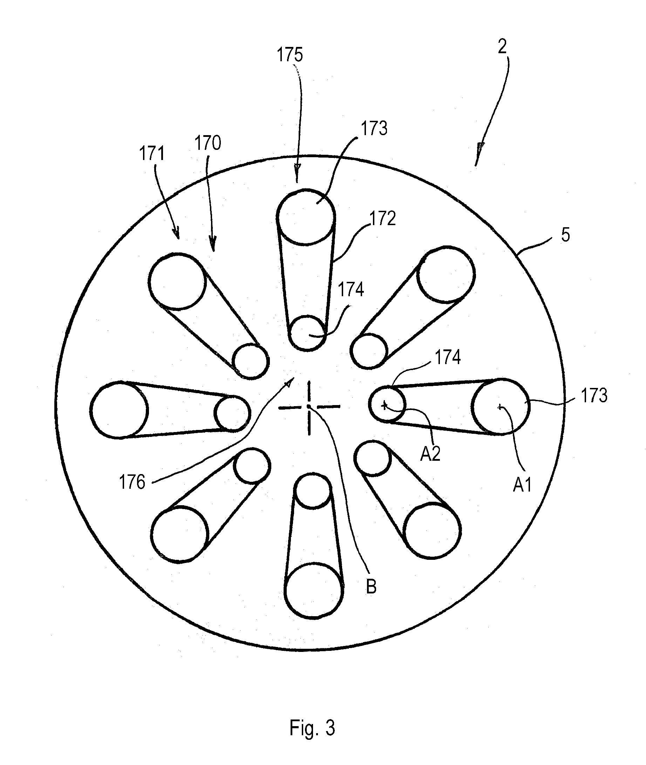

As shown in Figures 3 to 9, the conveying units 100 may comprise, instead of the further carousels 6, loop conveying units 171 each of which is provided with a loop flexible element 172, for example a belt, or a chain, made taut between a first rolling element 173 and a second rolling element 174, one of which is motorized.

Alternatively, more than two rolling elements can be provided.

The first rolling element 173 is rotatable around first rotation axis means A1, whereas the second rolling element 174 is rotatable around second rotation axis means A2.

With reference to Figure 3, the loop flexible element 172 is positioned in such a way that the first rotation axis means A1 and the second rotation axis means A2 are arranged substantially parallel to the rotation axis B.

The first rolling element 173 is arranged near to a peripheral zone 175 of the carousel 5, whereas the second rolling element 174 is arranged near to a central zone 176 of the carousel 5, the first rotation axis means A1 and the second rotation axis means A2 being positioned in such a way as to define a diametral plane of the carousel 5.

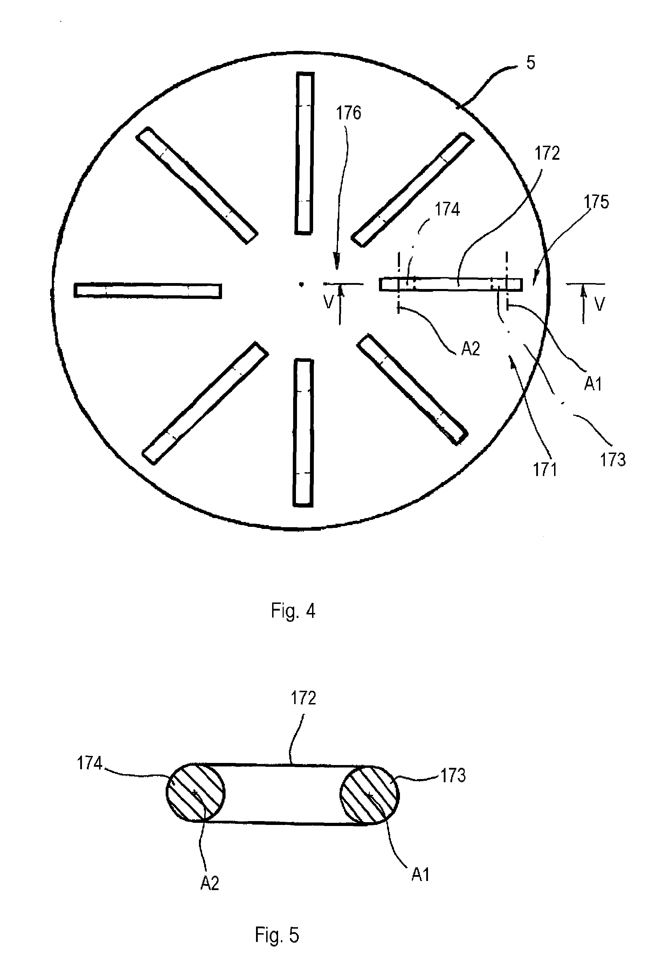

With reference to Figures 4 and 5, the loop flexible element 172 is positioned in such a way as to define a diametral plane of the carousel 5.

The first rolling element 173 is arranged near to a peripheral zone 175 of the carousel 5, whereas the second rolling element 174 is arranged near to a central zone 176 of the carousel 5, the first rotation axis means A1 and the second rotation axis means A2 being positioned in such a way as to define a plane substantially parallel to the carousel 5.

In the embodiments shown in Figure 3 and Figures 4 and 5, as the loop flexible element 172 extends between the peripheral zone 175, at which it receives the objects, and the central zone 176, very high productivity of the apparatus 2 is obtained inasmuch as it is possible also to position objects at an internal portion of the carousel 5.

In this way, the apparatus 2, although having modest dimensions, can receive a great number of objects.

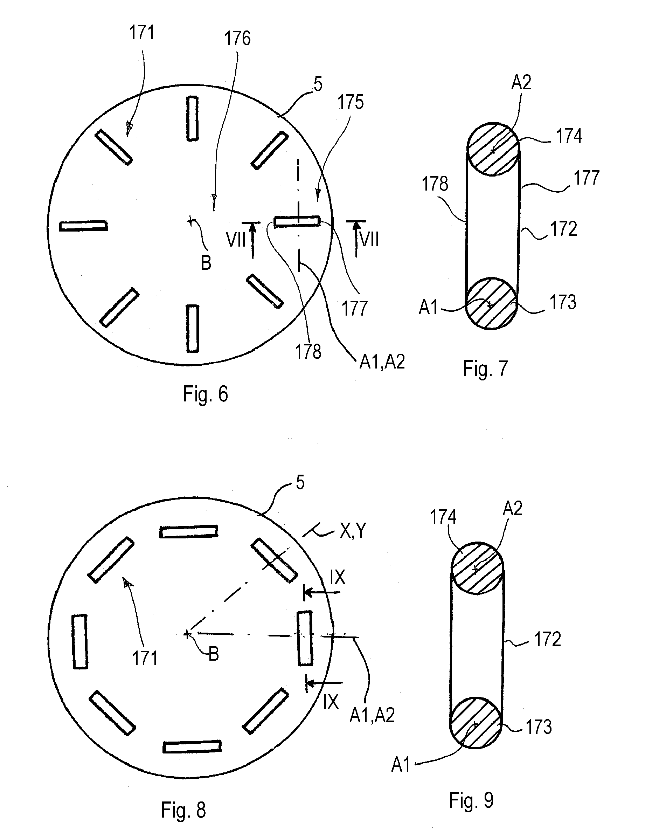

With reference to Figures 6 and 7, an embodiment of the apparatus 2 is shown, in which both the first rolling element 173 and the second rolling element 174 of each loop conveying unit 171 are positioned near to the peripheral zone 176, the second rolling element 174 being aligned on and overlapping the first rolling element 173.

The loop flexible element 172 is positioned in such a way as to have a first branch 177 facing the peripheral zone 175 and a second branch 178 facing the central zone 176.

With reference to Figures 8 and 9, an embodiment of the apparatus 2 is shown, in which both the first rolling element 173 and the second rolling element 174 di each loop conveying unit 171 are positioned near to the peripheral zone 176, the second rolling element 174 being aligned on and overlapping first rolling element 173.

The first rotation axis means A1 and the second rotation axis means A2 are arranged substantially radially in relation to the carousel 5, so as to define a diametral plane of the carousel 5.

The embodiments shown in Figures 6 and 7 and in Figures 8 and 9 enable apparatuses 2 to be made that significantly extend in a direction that is substantially parallel to the rotation axis B.

Such apparatuses may move a plurality of objects, whilst maintaining a very reduced plan dimension.

Such apparatuses are consequently particularly suitable for being installed inside environments that, since not having a significant surface extent, require a very careful exploitation of the internal space.

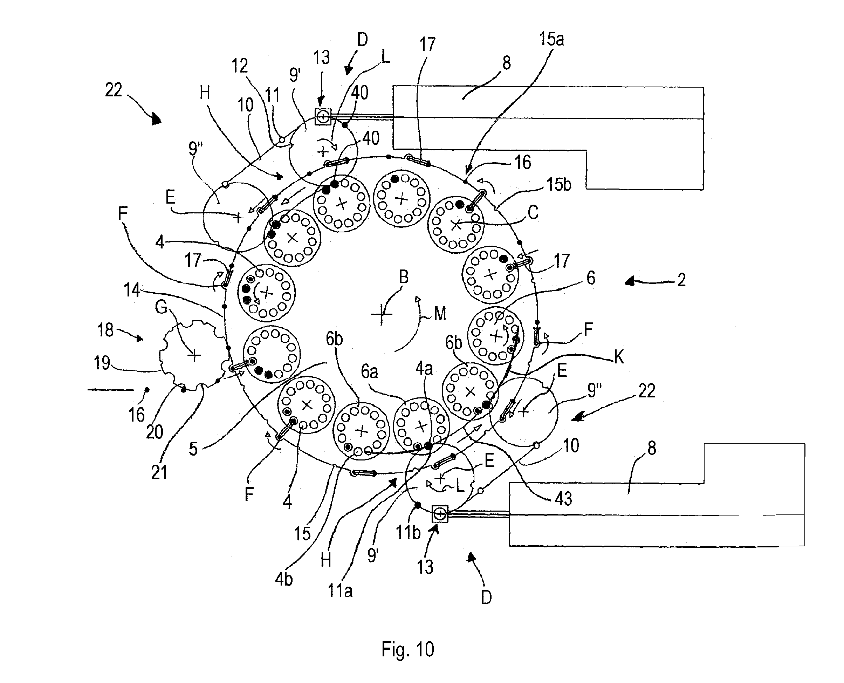

With reference to Figure 10 an embodiment of the apparatus 2 is shown, comprising a carousel 5 on which twelve further carousels 6 are rotatably supported, each peripherally provided with twelve moulds 4 distributed at preferably constant angular intervals.

The apparatus 2 is provided with two supplying devices 8 that supply the carousel 5 at two zones D thereof that are diametrically opposite each other.

Each supplying device 8 is provided with flexible supplying means 22, comprising a first discoidal element 9' and a second discoidal element 9".

The first discoidal elements 9' and the second discoidal elements 9" are rotatable, in a rotating direction L, around rotation axes E, and a flexible supplying element 10 is partially wound on them.

The first discoidal elements 9' and the second discoidal elements 9" are positioned in such a way as to partially overlap a peripheral portion of the carousel 5 so as to be able to interact with the further carousels 6.

On the flexible supplying element 10 a plurality of containing portions 11 is provided that are equidistant from one another, which receive a dose 40 of plastics in pasty state.

The first discoidal elements 9' and the second discoidal elements 9" are peripherally provided with recess elements 12 that are angularly equidistant and positioned in such a way that each recess element 12, during rotation of the first discoidal element 9' and of the second discoidal element 9", partially receives in the inside thereof a respective containing portion 11.

The flexible supplying element 10 comprises a branch 43 partially wound around a cylindrical surface K, which surface K is concentric with the rotation axis B, in such a way that the branch 43 extends along a portion of the trajectory travelled by the moulds 4 inside which the doses 40 have to be inserted.

As the flexible supplying element 10 and the further carousels 6 interact for a considerable time, inserting of the doses inside the moulds 40 is simplified.

The further rotatable carousels 6 are arranged peripherally on the carousel 5, in such a way that each mould 4 can receive from a containing portion 11 a dose 40 of plastics. The carousel 5 is provided, along a peripheral edge 14 thereof, with a plurality of notches 15 spaced uniformly apart from one another and shaped so as to be able to receive objects 16 that have been formed in the moulds 4.

Between adjacent notches 15 arm elements 17 are arranged that are rotatably connected to the peripheral edge 14.

Each arm element 17 is associated with a corresponding further carousel 6 and can be rotated around an axis F thereof, parallel to the rotation axis B.

Each arm element 17 moves an object 16 away from a first position, in which the object 16 is arranged inside a mould 4 of a further carousel 6 corresponding to the arm element 17, to a second position, in which the object 16 is arranged inside a notch 15 adjacent to the arm element 17.

Each arm element 17 is movable tangentially in relation to the carousel 5 towards, and away from, the notches 15.

Furthermore, each arm element 17 is movable radially in relation to the carousel 5 towards, and away from, the further carousels 6.

With each arm element 17 two notches 15 are associated, a first notch 15a arranged downstream of the arm element 17 in relation to a rotating direction M of the carousel 5 and a second notch 15b arranged upstream of the arm element 17 in relation to the rotating direction M of the carousel 5.

As a result, the number of notches 15 is double the number of further carousels 6.

It should be noted that the total number of notches 15 is equal to the product of the number of further carousels 6 for the number of supplying devices 8.

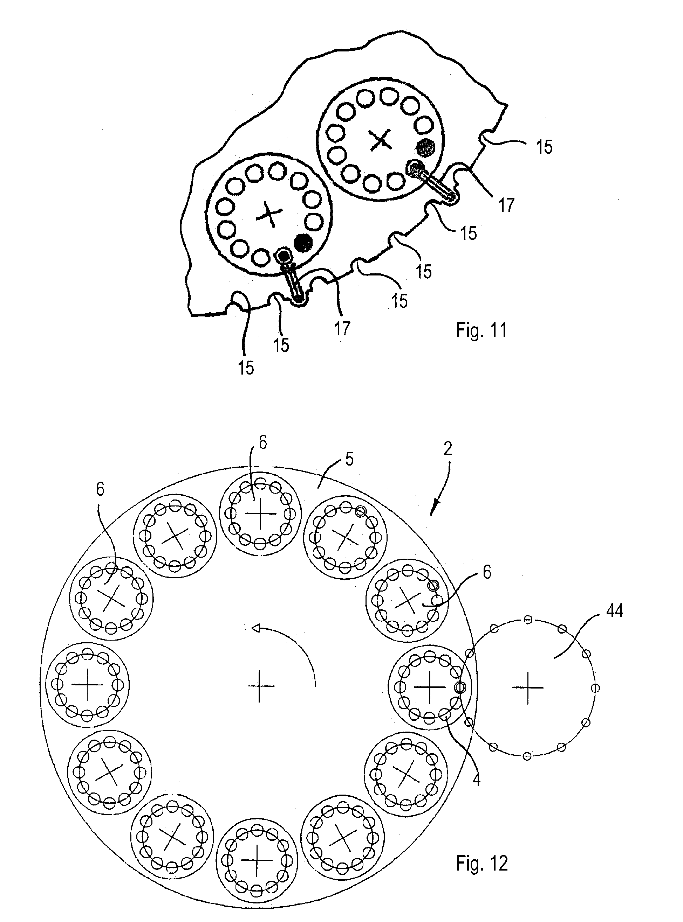

With reference to Figure 11, an embodiment of the apparatus is shown, in which with each arm element 17 four notches 15 rather than two are associated, in other words, the total number of notches is greater than the product of the number of the further carousels 6 by the number of supplying devices 8.

As a result, the moulded objects 16 can be kept on the carousel 5 for a prolonged period, i.e. whilst the carousel 5 performs a plurality of revolutions around the rotation axis B.

The arm elements are extendible along a longitudinal dimension thereof, in such a way as to be able to deposit the moulded objects 16 in notches 15 more or less distant from the zone at which the arm elements 17 are rotatably supported on the carousel 5.

The apparatus 2 comprises, furthermore, a removing wheel 18, which removes from the gaps 15 the moulded objects 16 to convey the latter to a collection station.

The removing wheel 18 is tangential to the carousel 5 and is rotatable around a further rotation axis G, arranged substantially parallel to the rotation axis B.

The removing wheel 18, at a further peripheral edge 19 thereof, is provided with seats 20 that are spaced substantially uniformly from one another, said seats 20 being arranged for receiving the moulded objects 16.

The removing wheel 18 is rotated in such a way that each seat 20 receives an object 16 from a notch 15.

Between adjacent seats 20 recesses 21 are obtained that receive a portion of the arm elements 17 when the latter are near to the interaction zone between the carousel 5 and the removing wheel 18 to prevent the arm elements 17 interfering with the removing wheel 18.

In an embodiment that is not shown, the apparatus comprises, instead of the removing wheel 18, flexible removing means that is shaped like the flexible supplying means 22 disclosed above and provided with a flexible removing element that removes the moulded objects 16 from the further carousels 6.

During operation of the apparatus 2, the containing portions 11 are supplied in succession with doses 40 of plastics from dispensing nozzle means 13 whereas the carousel 5 is rotated in a continuous manner in the rotating direction M, opposite a rotating direction L of the first discoidal elements 9' and of the second discoidal elements 9".

When the flexible supplying elements 10 advance, a first containing portion 11a reaches a transferring position H in which it releases the dose 40 contained therein to a first mould 4a of a first further carousel 6a.

Subsequently, a second further carousel 6b arranged upstream of the first further carousel 6a reaches the vicinity of the first discoidal element 9' in such a way that a further first mould 4b associated therewith receives another dose 40 from a second containing portion 11b that is adjacent to the first containing portion 11a and is arranged upstream of the latter in relation to the advancing direction of the flexible supplying element 10.

During a complete revolution of the carousel 5 around the rotation axis B each further carousel 6 receives a dose 40 inside a mould 4 of the moulds associated therewith.

Each further carousel 6, after receiving a dose 40 into a mould 4 thereof, is rotated by one angular step in such a way as to prepare a further mould 4, adjacent to the one that has just been supplied with the dose 40, to receive a further dose 40.

During a second complete revolution of the carousel 5 around the rotation axis B each further carousel 6 receives a further dose inside a further mould 4 of the moulds associated therewith.

The operations disclosed above are repeated until all the moulds 4 of all the further carousels 6 have received a dose 40.

It is furthermore observed that whilst the carousel 5 performs a half revolution the rotation axis B, each arm element 17 extracts an object from a mould 4 and positions the object in the first notch 15a.

Subsequently, whilst the carousel 5 performs a further half revolution around the rotation axis B, each arm element 17 extracts a further object from a mould 4 and positions it in the second gap 15b.

In this way, owing to the presence of the two supplying devices 8 and of the arm elements 17 each mould 4 is able to mould two objects 16 for each revolution of the carousel 5.

This enables high productivity to be obtained whilst maintaining rotation speed of the carousel 5 around the rotation axis B rather limited.

Limited rotation speed of the carousel 5 is matched by the objects staying a long time inside the moulds 4, which ensures satisfactory cooling and good shape stabilising.

This furthermore enables high productivity to be obtained in relation to low extrusion speed of the plastics.

With reference to Figure 30 a mould 4 for compression moulding of plastics is shown, which mould 4 comprises a die 42, suitable for receiving in the inside thereof a dose 40 of plastics in pasty state, and a punch 41 that can be driven towards, and away from, the die 42 by means of a driving device that is not shown.

With reference to Figure 12 an apparatus 1 is shown, comprising a supply 44 carousel of the known type.

Alternatively, the further carousels 6 may be supplied by the transferring device shown in international patent application WO 95/32086.

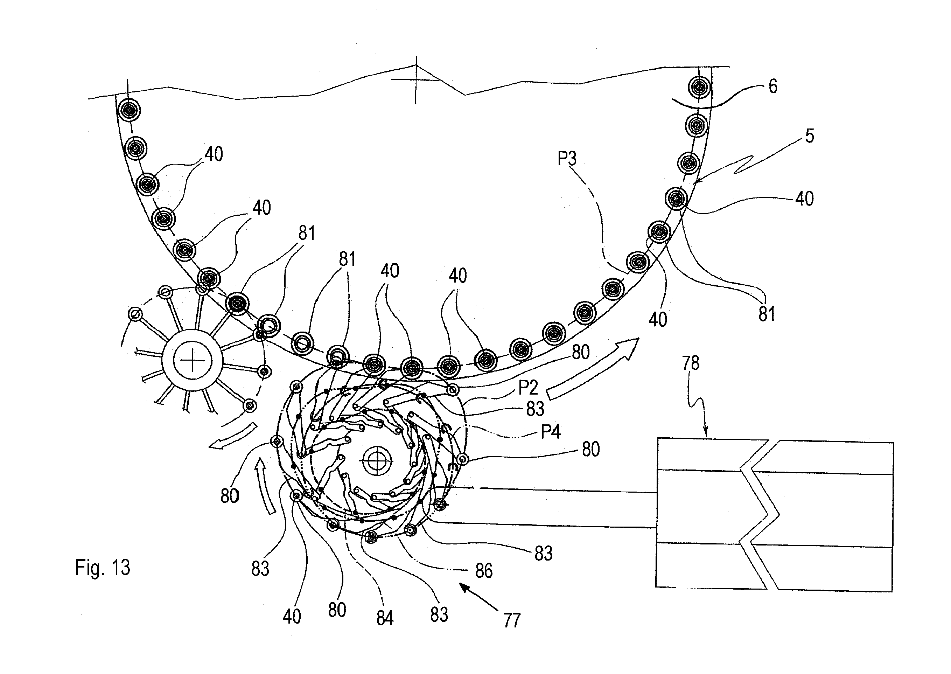

With reference to Figure 13 a transferring device 77 is shown, which is arranged for removing doses 40 from an extruder 78 and transferring the doses 40 to a further carousel 6.

The transferring device 77 can be used to associate with the further carousels 6 not only doses 40 but also objects of any type in relation to the operations that have to be conducted whilst such objects are on the further carousels.

The transferring device 55 can also be used to remove objects from the further carousels 6.

The transferring device 77 comprises a plurality of transferring elements 80 each of which is suitable for containing a dose 40 and transferring the dose 40 to the cavity of a die 81 of a mould 4.

The transferring device 77 comprises moving means suitable for moving in succession the transferring elements 80, which comprise a circular support 79, arranged on a substantially horizontal plane, rotating in synchrony with carousel 5, around a shaft 82 arranged substantially vertically. The moving means furthermore comprises a plurality of mechanisms 83, each of which has a respective transferring element 80 to a free end thereof.

Each mechanism 83 is provided with two degrees of freedom in relation to the circular support 79 and furthermore comprises coupling means suitable for defining movement thereof in relation to the angular position of the circular support 79.

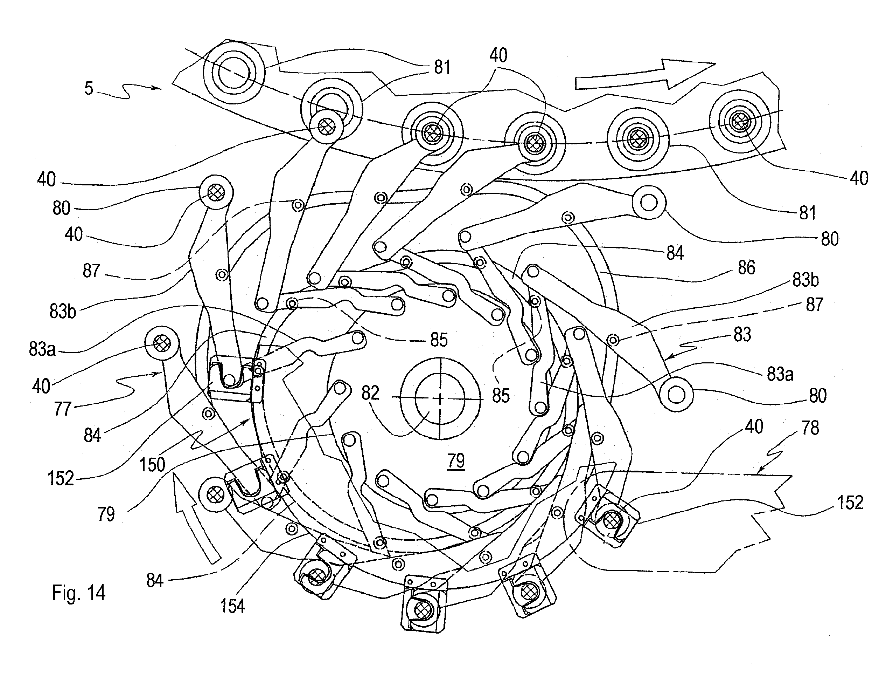

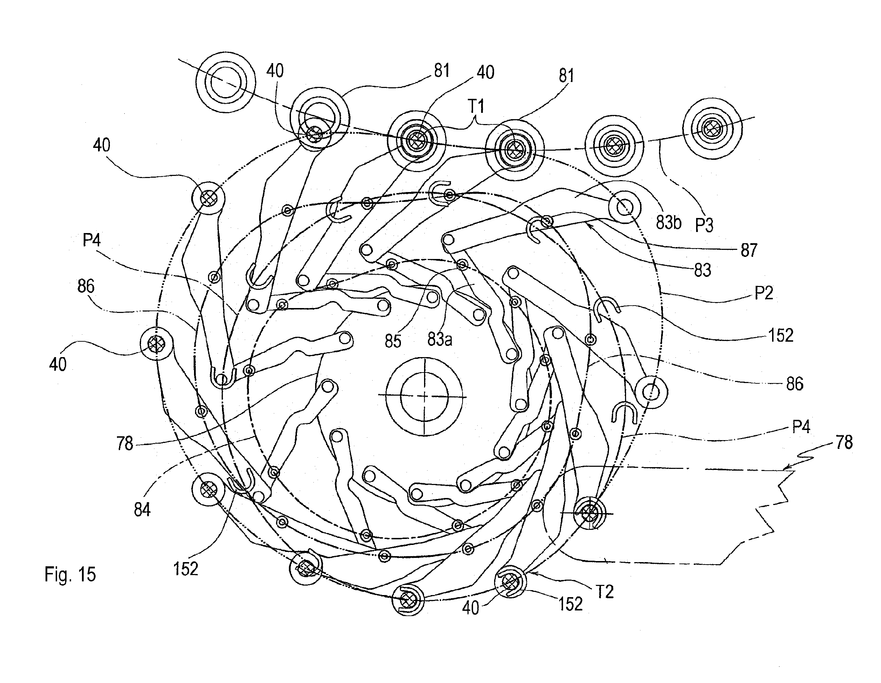

In particular, in the embodiment shown in Figures 14 and 15, each mechanism 83 consists of an articulated arm having two members pivoted together, a first member 83a of which is hinged at one end thereof to the circular support 79, and by a further end opposite the aforementioned end to a second member 83b, which comprises a free end that carries a corresponding transferring element 80.

The coupling means comprises, for the first members 83a of the mechanisms 83, a first fixed track 84 acting on driven means (first idle wheels 85) carried by the first members 83a and, for the second members 83b, a second fixed track 86 acting on further driven means (second idle wheels 87) carried by the second members 83b, in such a way as to univocally define the movement of the transferring elements 80 during each rotation revolution of the circular support 79.

The first fixed track 84 and the second fixed track 86 cause suitable points of the first members 83a and of the second members 83b, respectively, to follow respective paths. At each angular position of each mechanism 83 in relation to a fixed frame of the apparatus, the position of the first members 83a and of the second members 83b is defined in relation to the circular support 79 in an univocal manner, and thus in an univocal manner, in combination with movement of the circular support 79, movement of the mechanisms 83 and therefore the trajectory P2 travelled by the transferring elements 80 and the movement thereof along the trajectory P2 are defined.

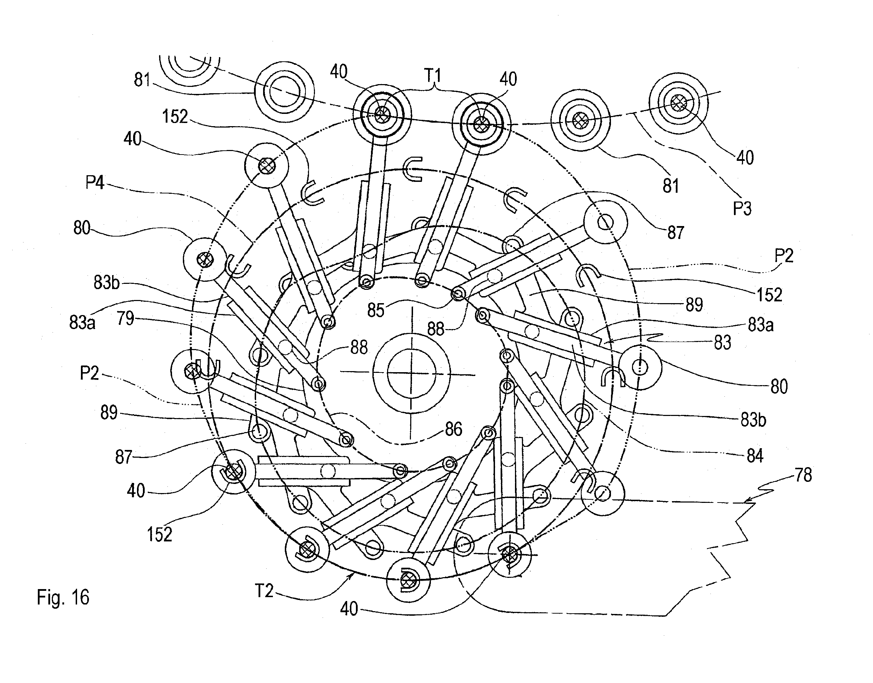

With reference to Figure 16 a version of the transferring device 77 is shown, in which each mechanism 83 comprises a first member 83a, pivoted at an end thereof on the circular support 79 (by a pivot 88), and a second member 83b that carries a transferring element 80 at a free end thereof. The second member 83b is coupled in a prismatic manner to the first member 83a, i.e. it is coupled with the possibility of sliding axially (without any other movement) in relation to the first member 83a, which is sleeve-shaped or guide-shaped.

A second fixed track 86 is provided that acts on driven means (first idle wheels 85) carried by levers 89 fixed to the first members 83a and a second fixed track 86 acting on further driven means (second idle wheels 87) carried by ends of the second members 83b.

This enables the movement of the transferring elements 80 to be defined univocally during each revolution of the circular support 79.

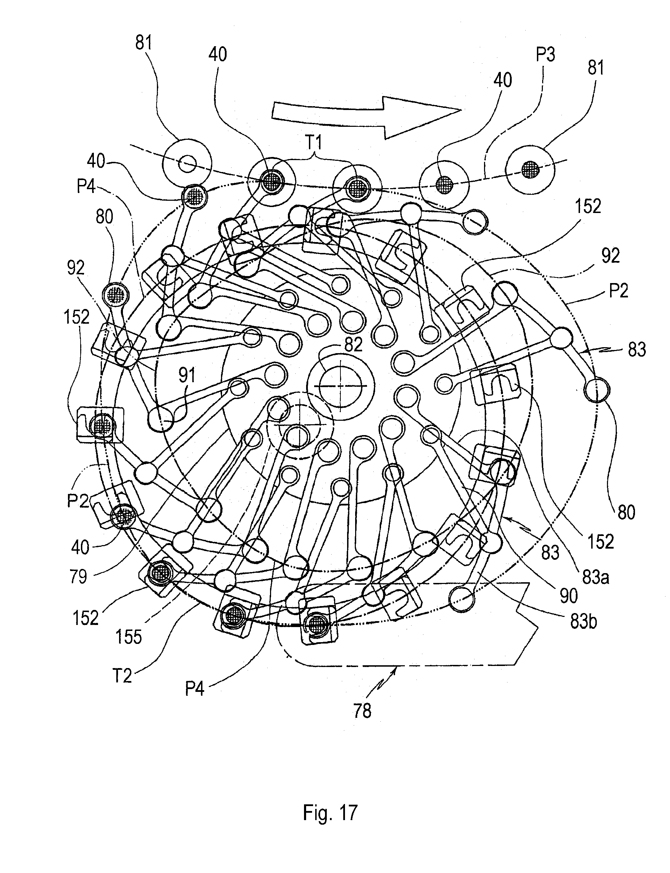

With reference to Figure 17 a still further version of the transferring device 77 is shown, in which each mechanism 83 comprises an articulated arm having a first member 83a and a second member 83b pivoted together. The first member 83a is pivoted at an end on the circular support 79 and the second member 83b carries a transfer element 80.

Each mechanism 83 furthermore comprises a third member 90 having an end hinged on the circular support 79 and a further end hinged on the second member 83b, in such a way that the circular support 79, the first member 83a, the second member 83b and the third member 83 form an articulated quadrilateral.

Each mechanism 83 comprises a driven element (a third idle wheel 91) pivoted on the articulated axis between the articulation axis between the first member 83a and the second member 83b and bilaterally caused to slide on a third fixed track 92. Sliding of the third idle wheel 91 on the third fixed track 92 univocally defines, in combination with the rotation of the circular support 79, the trajectory P2 travelled by the transferring elements 80.

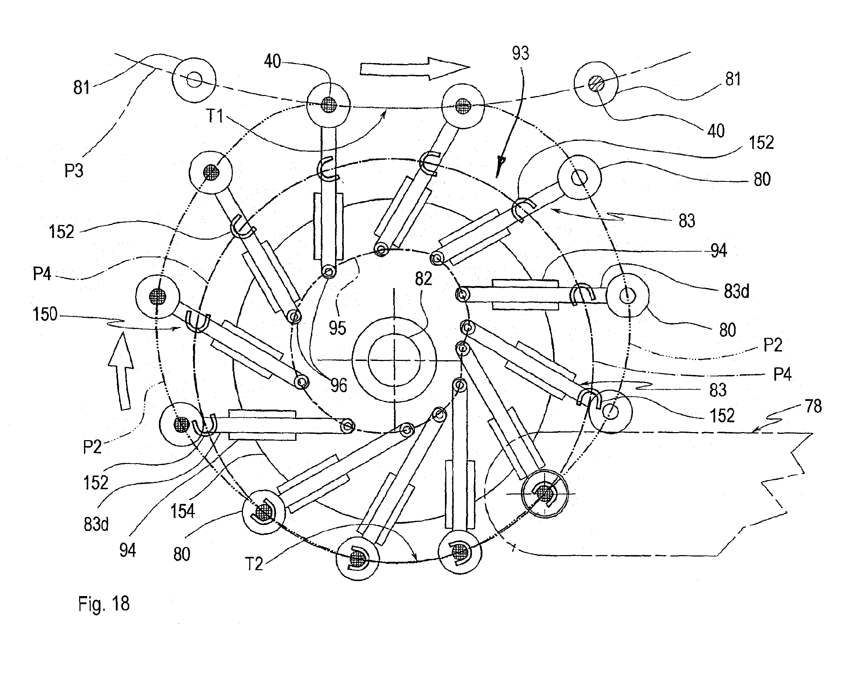

With reference to Figure 18 a further version of the transferring device 77 is shown, in which each mechanism 83 comprises a fourth member 93 carried by the circular support 79 and coupled with the latter by a coupling that has a single degree of freedom. In particular, each fourth member 93 carries at the external end thereof a respective transferring element 80 and is coupled in a prismatic manner with a sleeve 94 fixed to the circular support 79, in relation to which it can slide axially. Alternatively, the fourth member 93 can be hinged on the circular support 79 with a coupling having a single degree of freedom.

A fourth fixed track 95 is provided on which driven means are slidable (fourth idle wheels 96) hinged on the fourth member 93 in such a way as to univocally define the trajectory P2 travelled by the transferring elements 80 during each rotation revolution of the circular support 79.

It is possible to suitably design the profile of the first fixed track 84, the second fixed track 86, the third fixed track 92 and the fourth fixed track 95, so as to obtain a trajectory P2 along which the transferring elements 80 are advanced, said trajectory P2 having a portion T1 at which the trajectory P2 coincides with a portion of a further trajectory P3 travelled by the dies 81.

In this way, it is checked whether each transferring element 80, whilst it travels the portion T1, is in a coaxial position and above the cavity of a die 81 and transfers the doses 40 to the aforementioned cavity.

By providing a suitable length for the portion T1, a relatively long time is made available (depending on the rotation speed of the carousel 5 and the length of the portion T1) during which it is possible to carry out the transferring of each dose to a respective cavity, whereas the transferring element 80, in which the dose 40 is initially received, overlaps the cavity and is coaxial with the latter.

In the embodiments shown in Figures 13 to 18, the further trajectory P3 travelled by the matrices 81 is circular and the portion T1 is consequently also circular.

Alternatively, the further trajectory P3 can have any path, for example, it may comprise a rectilinear portion, along which the portion T1 is also defined.

The apparatus 2 furthermore comprises a further transferring device 150 that transfers the doses from the extruder 78 to the transferring elements 80.

The further transferring device 150 comprises a plurality of handling elements 152, each of which is provided with a concave internal surface 153 with a "C"-shaped cross section intended to come into contact with the doses 40.

The internal surface 153 is shaped in such a way as to define a channel, which is open on a side, to accompany the doses 40 by making the latter flow in contact with the internal surface 153.

The further transferring device 150 comprises moving means that drive the handling elements 152 so that the latter remove the doses 40 from the extruder 78 and arranged the doses 40 one at a time in the transferring elements 80.

The moving means comprises a circular support plate 154 that rotates, in synchrony with the carousel 5, around a vertical shaft coaxial with the shaft 82 of the circular support 79 (or around a shaft 155 that is far from the shaft 82, as in the embodiment shown in Figure 17).

The handling elements 152 are fixed to a peripheral zone of the support plate 154.

The handling elements 152 travel along a still further trajectory P4, in such a way that the internal surfaces 153 move on a substantially horizontal plane, below and near to a dispensing outlet of the extruder.

The still further trajectory P4 travelled by the handling elements 152 is circular and a portion thereof defines a further portion (indicated as T2 in Figures 15, 16, 17 and 18) that coincides with a further portion of the trajectory P2 travelled by the transferring elements 80.

Each handling element 152, while travelling along the further portion T2, is in a coaxial position and above a transferring element 80 and deposits a dose 40 in the latter.

As the trajectory P2 and the still further trajectory P4 coincide at the further portion T2, a relatively great time is made available (depending on the rotation speed of the carousel 5 and on the length of the further portion T2) during which it is possible to carry out the correct transferring of each dose 40 from a handling element 152 to a corresponding transferring element 80.

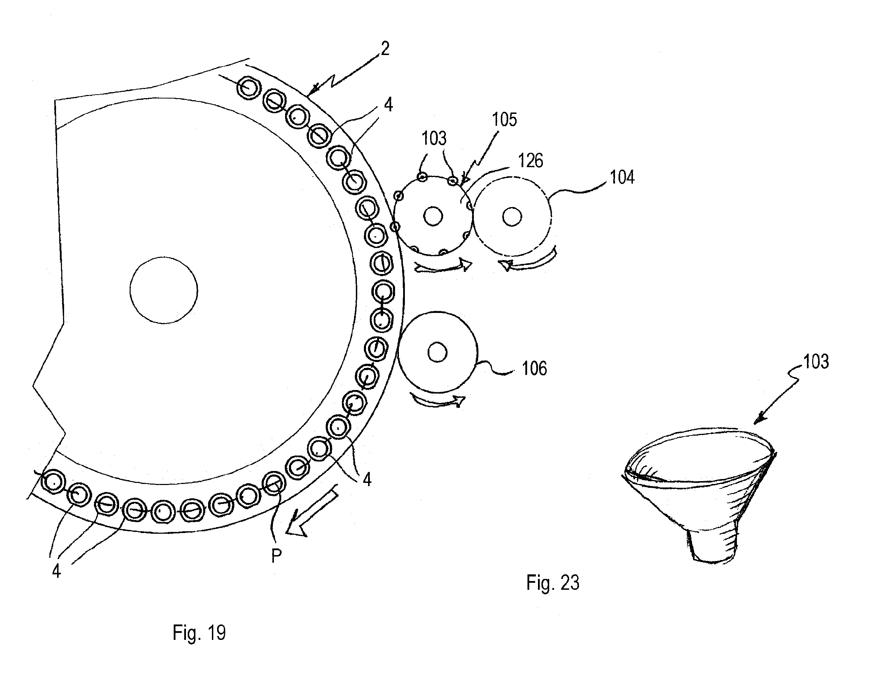

With reference to Figures 19 to 23 an apparatus 2 is shown, comprising a carousel 5 on which moulds 4 are installed for compression moulding of plastics, which moulds 4 are advanced along a circular trajectory P.

The apparatus comprises moving means 100 arranged for applying a component of an object to be moulded, consisting, for example, of an insert 103 (shown in perspective view in Figure 23), to a lower end 101 of a punch 102 suitable for penetrating the cavity of a die underneath, which is not shown.

In the example shown in Figures 19 to 23, the insert 103 is made of relatively stiff material and is pressed into the mould 4 together with one or more doses of plastics inserted into the die.

For this purpose, the insert 103 is applied to the lower end 101, which has a shape that is complementary to that of the internal surface of the insert, and is then compressed into the cavity of the mould inside which a dose of plastics has been inserted.

In an embodiment that is not shown, the moving means 100 supply the moulds 4 with doses 40.

The moving means 100 can furthermore be used to remove a moulded object from the moulds 4 to deliver the moulded object to a removing device.

With reference to Figures 19 to 23 again, the inserts 103 are first supplied by a rotating loading device 104 to a supplying device 105 located in a fixed position to the side of the carousel 5.

Downstream of the supplying device 105 in relation to the rotating direction of the carousel 5, a further supplying device 106 of known type is located that supplies the carousel 5 with the doses 40.

If the moving means 100 supplies the moulds 4, the further supplying device is shaped in such a way as to deliver the doses 40 to the moving means 100.

The moving means 100 comprises a plurality of moving elements 107, each of which is associated with a respective mould 4 so as to be movable with the latter along the trajectory P and is furthermore movable in relation to the mould 4. Each moving element 107 comprises a removing head 108 that removes the inserts 103 one at a time from the supplying device 105.

The removing head 108 comprises an arm 109 having at the free end thereof a concave seat 110 shaped so as to embrace the insert 103 with an arc of about 180 degrees.

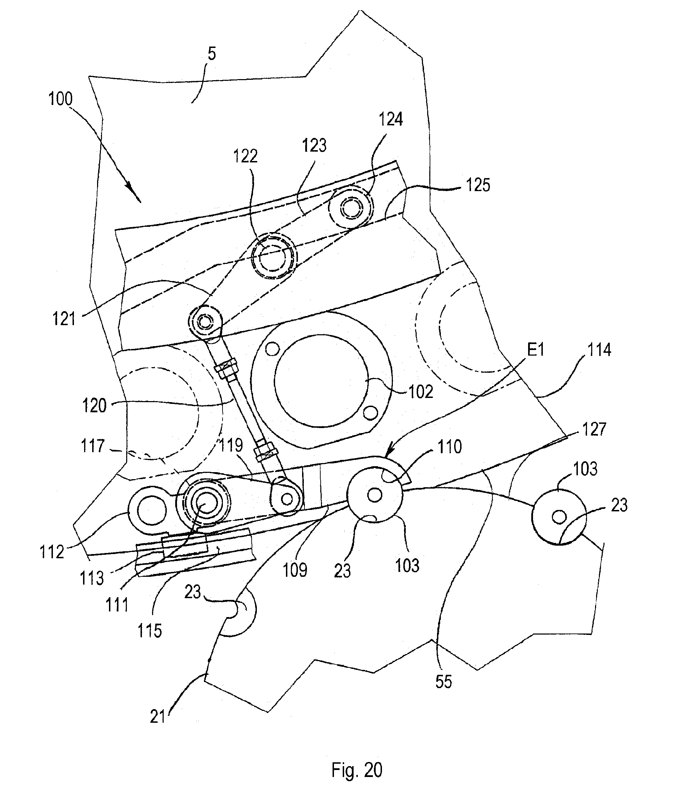

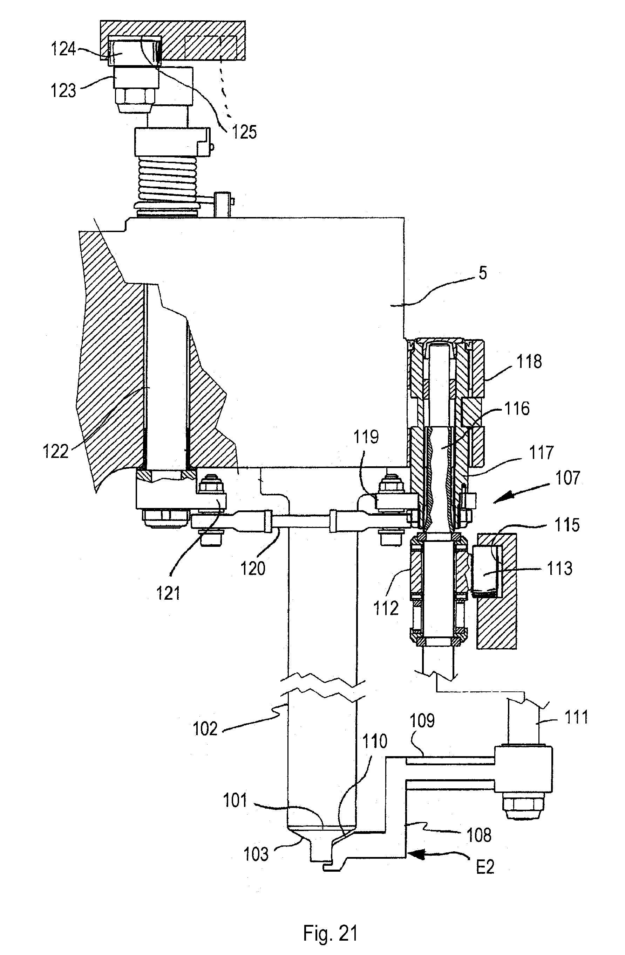

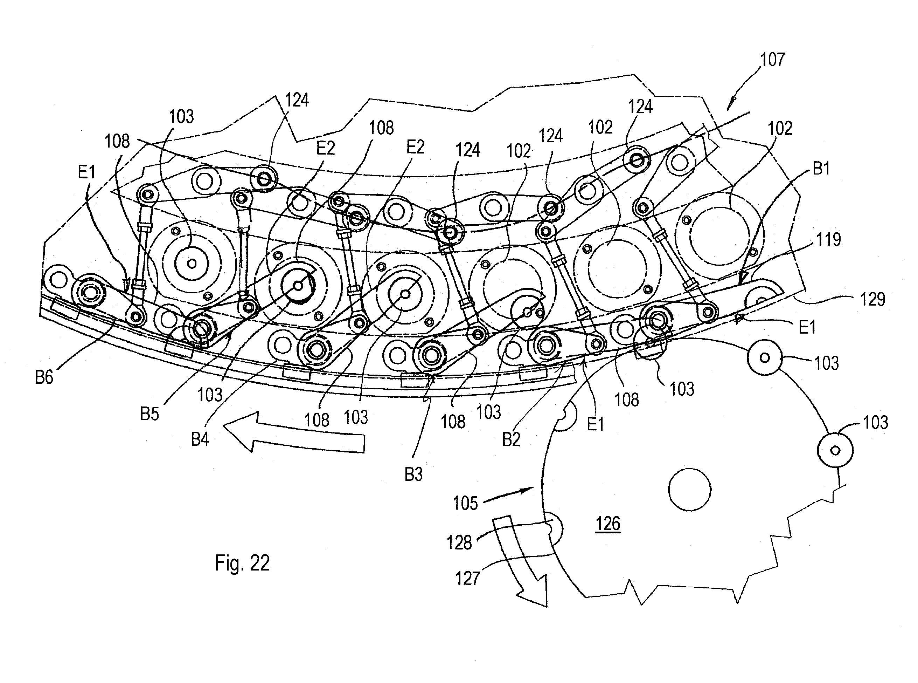

Each moving element 107 comprises a device that moves the removing head 108 in relation to the corresponding mould 4, between a first operating position E1, shown in Figures 20 and 22, in which the removing head 108 is placed outside the cavity of the mould 4 to receive an insert 103 from the supplying device 105, and a second operating position E2, shown in Figures 21 and 22, in which the removing head 108 delivers the insert 103 to the mould 4.

The arm 109 is fixed to the lower end of a stem 111 that is supported by a bush 112 to which the stem 111 is coupled axially while being free to rotate around the axis thereof. An idle wheel 113 is pivoted on the bush 112, which idle wheel 113 has an axis arranged on a substantially horizontal plane and radially in relation to the rotating axis of the carousel 5.

The idle wheel 113 slides inside a first fixed track 115 fixed to a peripheral portion 114 of the carousel 5, that affects the entire circumference thereof.

The first track 115 defines a trajectory extending on a cylindrical surface the axis of which coincides with the rotating axis of the carousel 50.

The trajectory deviates from a horizontal plane at a zone in which the transferring of the insert 103 on the carousel 5 occurs. The conformation of the aforementioned trajectory determines vertical shifts of the wheel 113 and with it corresponding vertical shifts of the bush 112 and, accordingly, of the stem 111 and of the arm 109.

An upper portion 116 of the stem 111, that protrudes above from the bush 112, is provided with axial grooves that engage in corresponding grooves obtained inside a hollow body 117.

The stem 111, when rotating, is then coupled with the hollow body 117, while being free to run axially in relation thereto. The hollow body 117 is connected by bush means 118 to the peripheral portion 114 with the sole degree of freedom to rotate around the axis of the hollow body 117.

To the hollow body 117 a first lever arm 119 is fixed that is driven through a connecting rod 120 by a second lever arm 121 fixed to a lower end of a further stem 122, connected to the further peripheral portion 114 in such a way as to be able to rotate only around the axis of the further stem 122. To an upper end of the stem 122 a third lever arm 123 is fixed, at a free end of which an idle wheel element 124 is pivoted that is rotatable around the axis that is substantially vertical and slidable inside a second fixed track 125 that is fixed to the peripheral portion 114, which extends along the entire perimeter of the carousel 5.

The second track 125 defines a path shaped in such a way as to generate shifts in a radial direction of the idle wheel element 124, at a zone of the apparatus in which the transferring of the inserts 103 on the carousel 5 occurs.

The shifts of the idle wheel element 124 cause oscillations of the third lever arm 123 around the axis of the further stem 122; the third lever arm 41, through the second lever arm 121, the connecting rod 120 and the first lever arm 119, drives the arm 109 and the removing head 108 associated therewith.

At the same time, the idle wheel 133, by interacting with the first track 115, causes a vertical shift of the stem 11 and consequently of the removing head 108.

The further stem 122, the first lever arm 119, the second lever arm 121, the third lever arm 123, the connecting rod 38, and the hollow body 117 define a first mechanism, driven by the movable idle wheel element 124 along the track 125, which moves the removing head 31 on a substantially horizontal plane.

The stem 111 and the bush 112 define a second mechanism, driven by the idle wheel 113 that is movable along the fixed track 125, which moves the removing head 108 in a substantially vertical direction.

The supplying device 105 comprises a rotating carousel element 126 with a substantially vertical axis that carries at the periphery 127 thereof a plurality of housings 128 each of which is suitable for containing an object to be delivered to a removing head 108, which object may consist, inter alia, of the insert 103, or of a dose 40.

Each removing head 108 takes on the first operating position E1 to pick up an insert 103 from a housing 128 and subsequently takes on the second operating position to deliver the insert 103 to a mould 4.

In Figure 22 a series of different operating configurations are illustrated - indicated with B1, B2, B3, B4, B5 and B6 - taken on by the moving elements 107 when removing and transferring the inserts 103 from the supplying device 105 to the moulds 4.

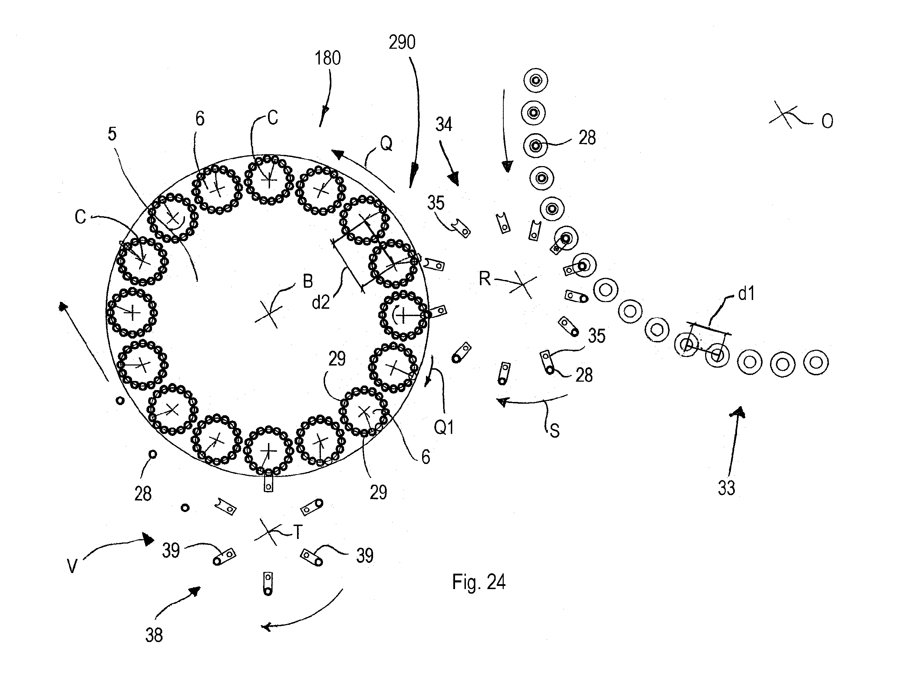

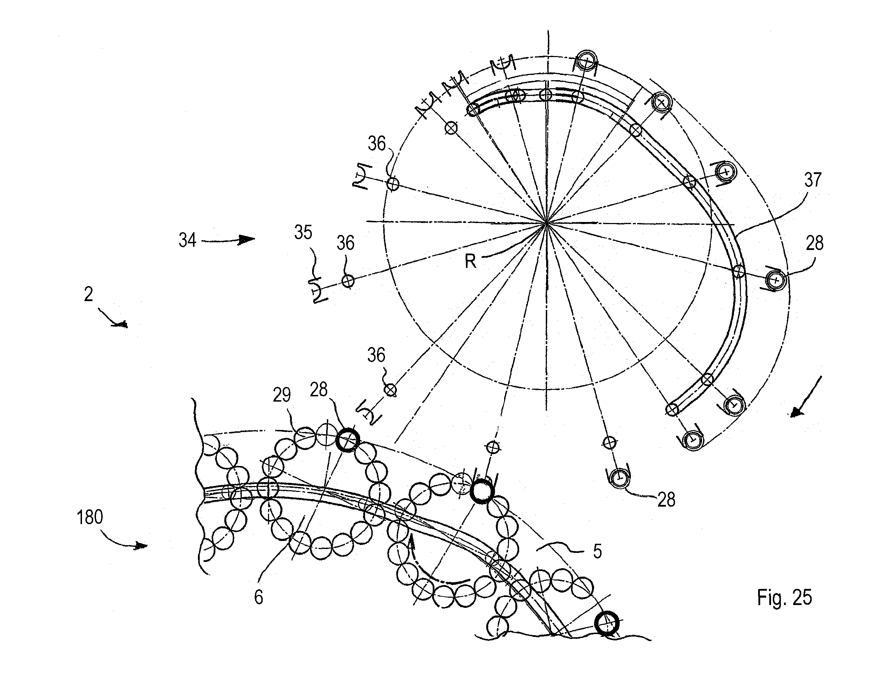

With reference to Figures 24 and 25, a further version of the apparatus 2 is shown, that is particularly suitable for thermal conditioning of objects, for example for the cooling of preforms 28 of containers, which preforms 28 are made of plastics.

The apparatus 2 is provided with a cooling carousel 180 comprising a carousel 5, rotatable in a rotating direction Q around a rotation axis B, and a plurality of further carousels 6 rotatably supported by the carousel 5, each further carousel 6 being rotatable in a further rotation direction Q1 around a further rotation axis C arranged substantially parallel to the rotation axis B.

Each further carousel 6 is peripherally provided with a plurality of cooling devices 29 that are angularly equidistant from one another.

A moulding carousel 33 is furthermore provided that is rotatable around an axis O, provided with moulds that form the preforms 28 by compression of doses of plastics.

Between the moulding carousel 33 and the cooling carousel 180 a moving wheel 34 is interposed, that is rotatable around a still further axis R, in a still further rotation direction S, opposite the further rotation direction Q, which transfers the preforms 28 from the moulding carousel 33 to the cooling devices 29 arranged on the carousel 5.

The moving wheel 34 is provided with a plurality of removing arms 35 that rotate fixed thereto and can move radially in relation to the still further axis R.

Each removing arm 35 comprises a guiding element 36 shaped so as to slide inside a groove 37, shaped like a cam profile, that extends around the further axis R in such a way as to be nearer the further axis R in proximity to the moulding carousel 33 and further away from the further axis R near to the carousel 5.

This enables the arm elements 35 to be provided with a tangential speed that varies according to position, this tangential speed being greater near to the carousel 5.

In an embodiment that is not shown, each arm element 35 can be provided, at an end thereof that is more distant from the still further axis R, with a handling unit rotatably supported on the arm element 35, this handling unit removing the preforms 28 from the moulding carousel 33 to deliver the preforms 28 to the carousel 5.

Control means can be furthermore provided to control rotation of each handling unit in relation to the corresponding arm element 35.

During a complete revolution of the carousel 5, a preform 28 is deposited in a cooling device 29 of each of the further carousels 6.

Preforms 28 supported by removing arms 35 that are adjacent to one another are positioned inside cooling devices 29 associated with further carousels 6 adjacent to one another. Subsequently, each further carousel 6 is rotated in such a way that a cooling device 29, inside which there is no preform, is facing the moving wheel 34.

During a subsequent revolution of the carousel 5, a further preform 28 is deposited in a further cooling device 29 of each of the further carousels 6.

Each of the above-mentioned further preforms is received in a cooling device 29 adjacent to the cooling device 29 that has received on of the aforementioned preforms 28, during the preceding revolution of the carousel 5.

This operation is repeated until all the cooling devices 29 have been supplied with preforms 28.

At this point, a preform is removed from a cooling device 29 of a further carousel 6 to enable a still further preform 28 to be inserted into the aforementioned cooling device 29.

In particular, if the further carousels 6 are angularly indexed, each further carousel 6 performs a rotation equal to one angular step at each revolution of the carousel 5.

Advantageously, each further carousel 6 performs at least part of the aforementioned rotation when the further carousel 6 is near to a zone 290 in which the moving wheel interacts with the carousel 5.

In this way, as the further rotation direction Q1 of the further carousels 6 is opposite the rotating direction Q of the carousel 5, it is possible to obtain a time increase during which each removing arm 35 can interact with a respective cooling device 29, so that a preform 28 can easily be delivered to the cooling carousel 180.

It is observed that the preform 28 is kept inside the respective cooling device 29 for a number of revolutions of the carousel 5 equal to the number of the cooling devices 29 provided on each of the further carousels 6.

A further moving wheel 38 is furthermore provided that is rotatable around the still further axis T in a direction opposite the rotating direction Q, provided with a plurality of further removing arms 39 spaced apart from one another in a uniform manner that remove the preforms 28 from the carousel 5 and deliver the preforms 28 to a collecting device.

As a result, the preforms 28 can be kept inside the cooling devices 29 for a sufficiently long time to enable proper cooling without this jeopardising the performance of the apparatus.

It is noted that, owing to the apparatus according to the invention, it is possible to use carousels that have significantly smaller overall dimensions than those of carousels made according to the prior art, with the same productivity and cooling degree of the preforms.

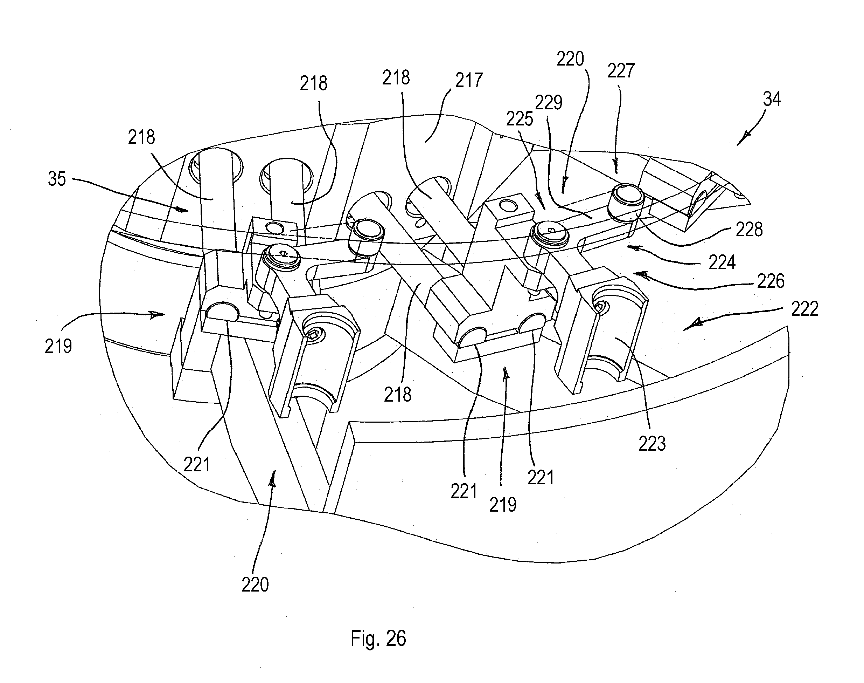

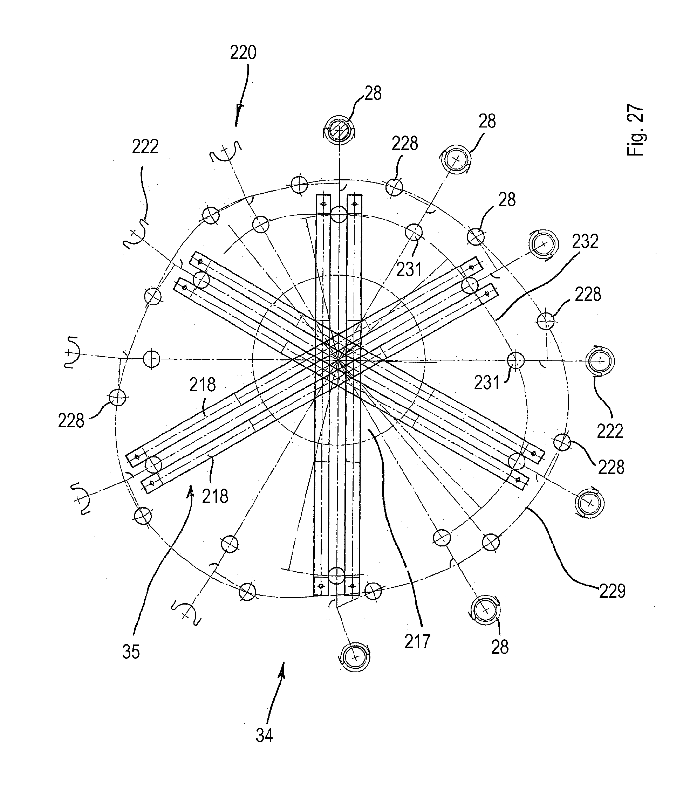

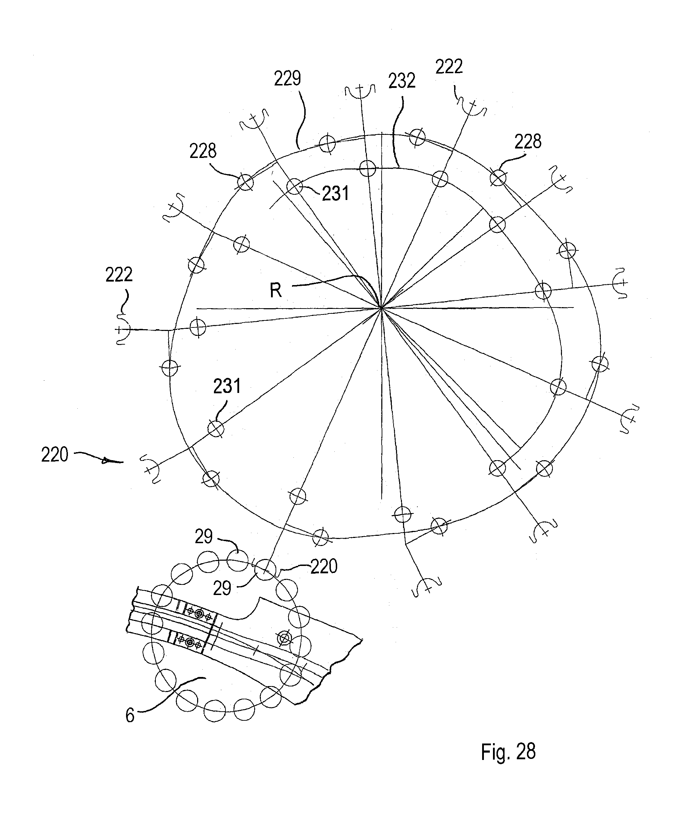

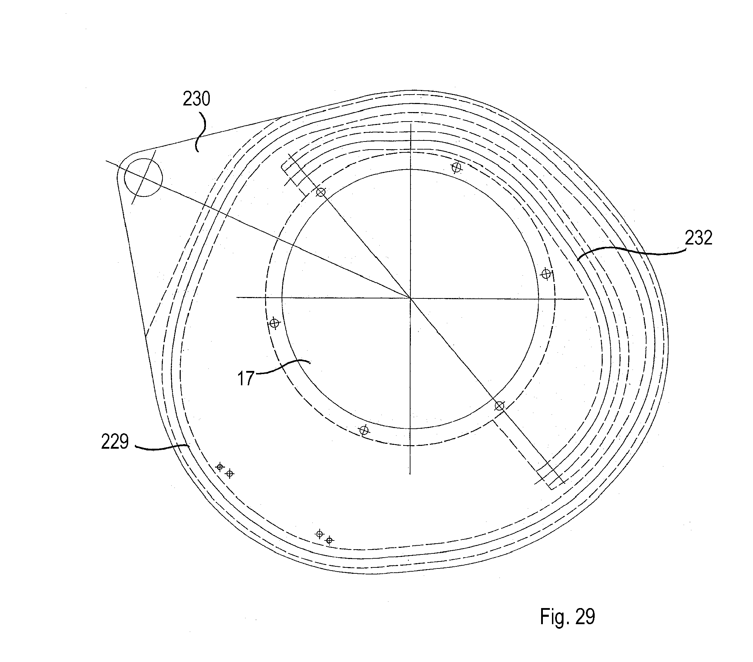

With reference to Figures 26 to 29 an embodiment of the moving wheel 34 is shown, comprising a turntable 217 on which the removing arms 35 are slidingly supported.

The removing arms 35 are arranged radially in relation to the turntable 217, central portions of the removing arms overlapping one another.

Each removing arm 34 comprises a pair of rods 218 slidable inside suitable seats obtained in the turntable 217.

At opposite ends of each pair of rods 218 there are provided supporting blocks 219 arranged for mutually connecting the rods 218 and for supporting handling unit 220 arranged for moving the preforms 28.

The rods 218 are substantially cylinder-shaped and comprise at least a sliding coupling portion that is slidable in one of the seats of the turntable 217.

The rods 218 have, at the central portion and at the end zones, a milled part 221 that enables the space requirements of the transferring wheel 34 to be limited parallel to the still further rotation axis R, when the removing arms are arranged on top of one another.

In other words, the central portion and the end zones have a transverse dimension that is less than the aforementioned coupling portion.

Each removing arm 35 is provided with two handling units 220 associated with opposite ends of the rods 218. In this way, each removing arm 35 can move two preforms 28, in the manner that will be disclosed below.

Each handling unit 220 comprises a removing element 222 provided with an alveolus 223 arranged for receiving a preform 28.

The removing element 222 is connected to a lever 224 rotatably supported on a respective supporting block 219.

The lever 224, being for example L-shaped, comprises a central portion 225 hinged on the supporting block 219, a first end 226 with which the removing element 222 is associated and a second end 227 on which a rolling element 228 is rotatably supported that is arranged for engaging a cam profile 229 obtained in a fixed plate 230 of the transferring wheel 34 arranged above the turntable 217.

The rolling element 228, cooperating with the cam profile 229, controls oscillation of the removing element 222 in relation to the corresponding supporting block 219.

On each removing arm 35 a further rolling element 231 is furthermore rotatably supported that is arranged for engaging a further cam profile 232 obtained in the fixed plate 230.

The further rolling element 231, by cooperating with the further cam profile 232, controls sliding of the removing element 222 in relation to the turntable 217.

In operation, whilst the turntable 217 is rotated, each removing element 222 removes a preform from the moulding carousel 33 and delivers the preform to the cooling carousel 180.

Adjacent forming moulds on the moulding carousel 33 are separated by a distance d1 that is less than a further distance d2 that separates a first cooling device 29, associated with a first further carousel 6, and a second cooling device 29, associated with a second further carousel 6 adjacent to the first further carousel 6.

The further rolling element 231, engaging the further cam profile 232, causes the rods 218 to slide in relation to the rotating plate 217. In this way, it is possible to remove the preforms 28 from the moulding carousel 233 according to a preset removing pitch and to transfer the preforms 28 to the further carousels 6 of the cooling carousel 180 according to a preset delivering pitch that is different from the removing pitch.

The rolling element 228, engaging the cam profile 229, causes the removing elements 222 to oscillate in relation to the respective supporting blocks 219, this enables the delivering operations of the preforms 28 to the cooling carousel 180 to be simplified.

The further cam profile 229, is in fact shaped in such a way that each removing element 222, controlled by the respective rolling element 228, travels along a trajectory a portion of which substantially coincides with a further trajectory along which the cooling devices 29 travel that are installed on the further carousel 6.

Similarly, a further portion of the trajectory along which the removing element 222 travels substantially coincides with a still further trajectory along which the forming moulds travel that are installed on the moulding carousel 33.

The rolling element 228 and the cam profile 229 enable greater time to be obtained during which a preform 28 can be delivered to the cooling carousel 180 compared with cases in which the removing elements 222 are shaped in such a way as to interact with the cooling devices 29 only when the respective trajectories are tangent.

For the same reasons, it is possible to increase a period of time in which a preform is removed from the moulding carousel 33.

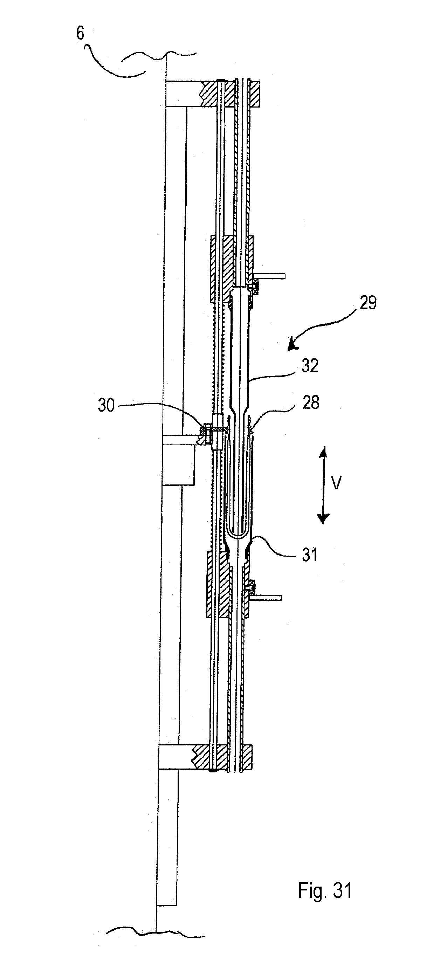

With reference to Figure 31, the cooling devices 29 comprise a supporting element 30, shaped so as to support the preform 28, and a tubular element 31 that receives the preform 28 in the inside thereof.

Inside the tubular element 31, the preform 28 is cooled by a flow of fluid.

Alternatively, the preform can be cooled by recirculating fluid through conduits obtained in the tubular element 31.

The cooling devices 29 furthermore comprise an elongated element 32 arranged for directing a further flow of fluid into the preform.

Alternatively, cooling can occur by sucking fluid, or by contact with the surface of the elongated element 32, the latter being cooled internally by a liquid that circulates in conduits obtained therein.

The tubular element 31 and the elongated element 32 are movable towards, and away from, each other along a direction N, in such a way as to enable inserting of a preform 28 to be cooled inside the tubular element 31 and extracting of the latter from the tubular element 31 once the perform 28 has been cooled.

Alternatively, the carousel 5 and the further carousels 6 may belong to un apparatus for filling containers, or to an apparatus for applying caps to containers, or to an apparatus for applying labels to objects, or to an apparatus for moulding objects by injection-compression, for example objects made of plastics, or to an apparatus for decorating/colouring objects, or to an apparatus for treating/conditioning objects thermally.

Still alternatively, the further carousels 6 can be equipped with moulds 58 for blow-moulding of containers.

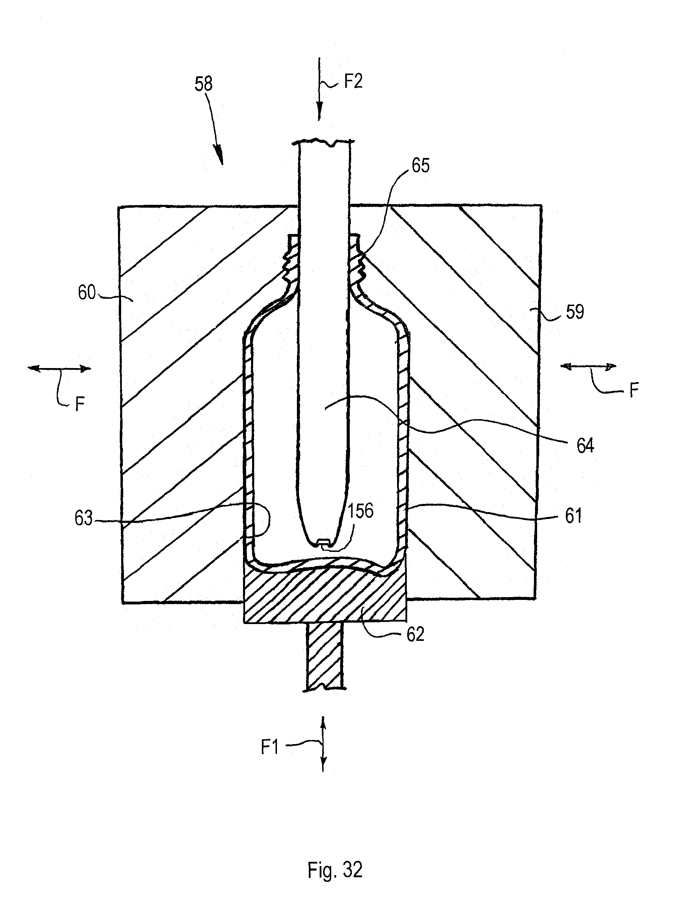

With reference to Figure 32, the moulds 58 comprise a first half mould 59 and a second half mould 60 that can be shifted towards and away from each other, as shown in arrows F.

The first half mould 59 and the second half mould 60 are movable between an open position, in which a moulded container 61 can be removed from the mould 58, and a closed position, in which the first half mould 59 and the second half mould 60 cooperate with a movable element 62 to define a moulding cavity 63.

The mould 58 furthermore comprises an elongated body 64 arranged for being received inside the moulding cavity 63, the elongated body 64 being provided with hole means 156 from which pressurised air is expelled.

In operation, a neck portion 65 of a preform 28 is clamped between the first half mould 59 and the second half mould 60, whilst a body of the preform protrudes inside the moulding cavity 63.

Subsequently, the elongated body 64 is inserted inside the preform, as shown by the arrow F2, until it interacts with a bottom thereof.

Still subsequently, the elongated body 64 is further translated such as to stretch the preform.

When translating, and subsequently thereto, a flow of pressurised air expands the preform until the latter is shaped according to the geometry of the moulding cavity 63.

During the stretching step, the bottom of the preform 28 is supported by the movable element 62 that moves synchronously and concordantly in relation to the elongated element 64.

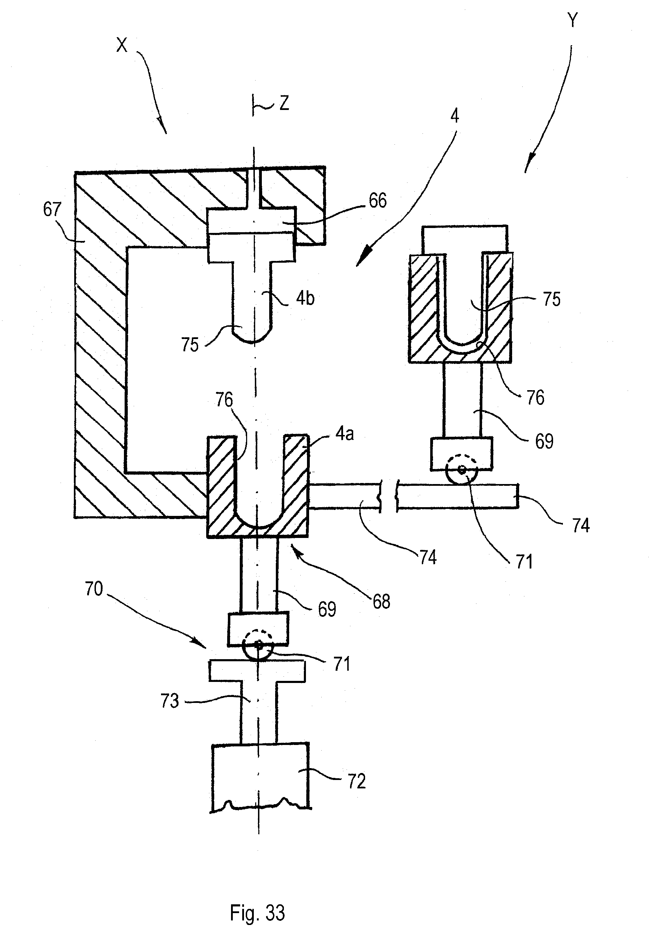

With reference to Figure 33 a mould 4, for example for compression moulding of plastics, is shown, which mould 4 is installed on a further carousel 6 and comprising a female half mould 4a and a male half mould 4b.

The male half mould 4b is associated with a frame 67 fixed to the further carousel 6.

Between the frame 67 and the male half mould 4b a chamber 66 is arranged for receiving a pressurised gas.

Inserting high-pressurised gas inside the chamber 66 causes sliding of the male half mould 4b in relation to the frame 67.

The female half mould 4a is fixed to an end 68 of a stem 69, at a further end 70 of which a wheel 71 is rotatably supported.

With the mould a linear actuator 72 is operationally associable provided with a movable member 73 that drives the female half mould 4a along a longitudinal axis Z of the mould 4.

Alternatively, the male half mould can be movable towards, and away from, the female half mould.

Still alternatively both the male half mould and the female half mould can be movable.

The mould 4 can assume an open configuration, indicated by X, in which the female half mould 4a and the male half mould 4b are distanced from each other, to enable a moulded object to be extracted from the female half mould 4a and a dose of plastics to be inserted, and a closed configuration, indicated by Y, in which the male half mould 4b and the female half mould 4a are clamped against each other to obtain a moulded object from the dose of plastics.

The linear actuator 72 may comprise, for example, a mechanical actuator, or an electromechanical actuator, or a hydraulic actuator, or a pneumatic actuator.

This enables an apparatus to be obtained in which the closing speed of the mould 4 can very high values without the female half mould 4a is subjected to stresses such as to impair the structural resistance thereof.

It is in fact noted that owing to the invention, the movable member is mainly subjected to axial stresses, on the other hand what occurs when prior-art cam actuators are used is noted.

The mould 4 is operationally associable with a track 74 on which the wheel 71 can slide after the mould 4 has reached the closed configuration Y in which a punch 75 of the male half mould 4b is received in a cavity 76 of the female half mould 4a.

The track 74 maintains the mould 4 in the closed configuration Y without it being necessary for the linear actuator 72 to act continuously on the movable member 73.

In other words, the track 74 acts like a maintaining device for maintaining the mould 4 in the closed configuration Y.

In the closed configuration Y, appropriate mould clamping force is obtained by inserting a certain quantity of pressurised fluid inside the chamber 66.

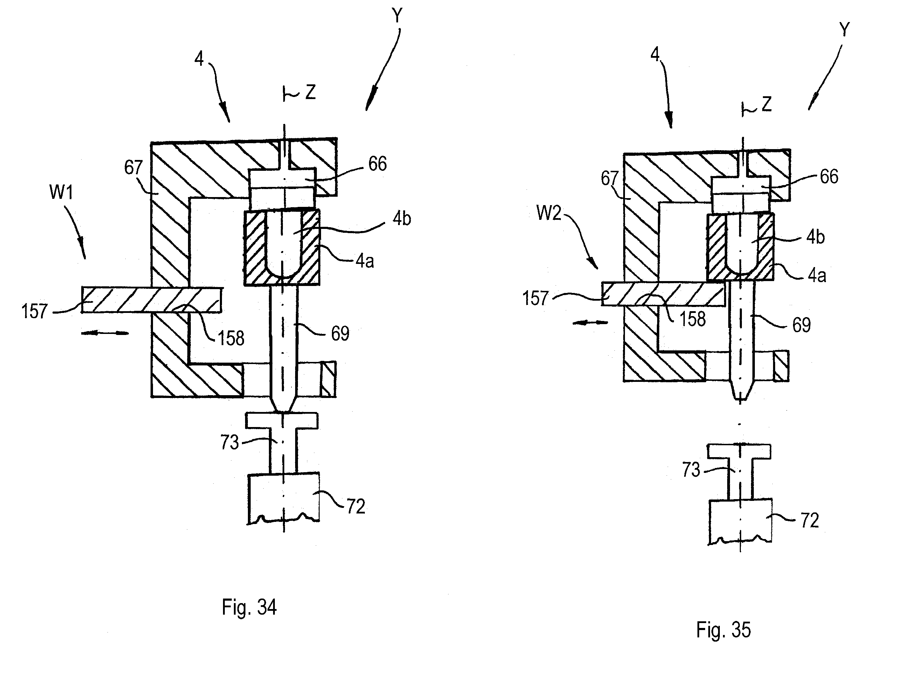

With reference to Figures 34 and 35 a version of the maintaining device for maintaining the mould 4 in the closed configuration Y is shown, comprising a latch element 157 that is slidable inside a seat 158 obtained in the frame 67. The latch element 157 is movable between a retracted position W1, in which the latch element 157 enables the female half mould 4a to slide parallel to the longitudinal axis Z thereof in order to go from the open configuration X to the closed configuration Y, and vice versa, and an extended position W2, in which the latch element interacts with the female half mould 4a for maintaining the female half mould 4 in the closed configuration Y.

In operation, the movable member 73 protrudes from the linear actuator 72 to transfer the female half mould 4a from the open configuration X to the closed configuration Y, whereas the latch element 157 is maintained in the retracted position W1.

Subsequently, the latch element 157 is taken to the extended position W2.

Subsequently, the movable member 73 is returned by the linear actuator 72, whilst the latch element 157 maintains the female half mould 4a in the closed configuration Y.

Still subsequently, the further carousel 6 is rotated to make a further female half mould 4a interact with the linear actuator 72.

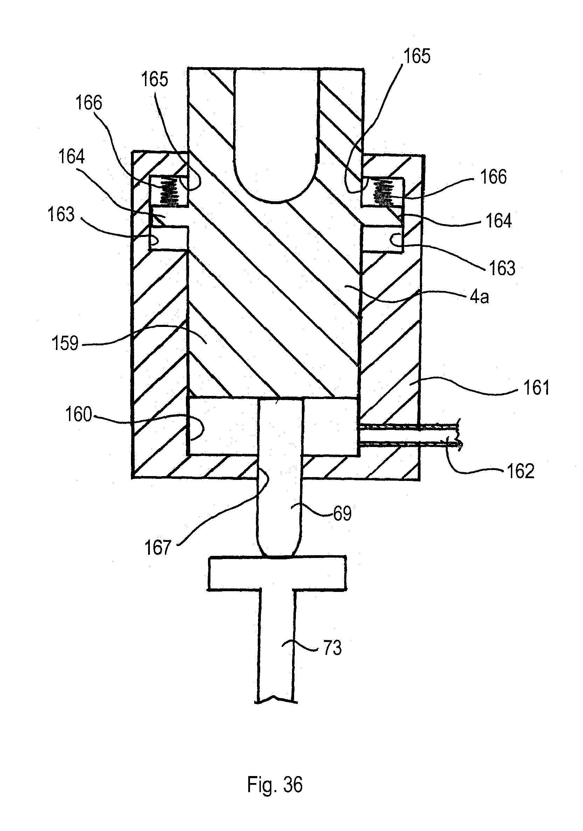

With reference to Figure 36 a further version of the maintaining device for maintaining the mould 4 in the closed configuration Y is shown, in which the female half mould 4a is provided with a body 159 that is slidable inside a chamber 160 obtained in a casing frame 161 fixed to the further carousel 6.

As will be explained in greater detail below, the casing frame 161 acts as a liner of a pneumatic cylinder the piston of which is defined by the body 159.

The casing frame 161 is provided with conduit means 162 arranged for enabling pressurised air to enter into the chamber 160 and enabling the aforementioned pressurised air to exit from the chamber 160.

In the casing frame 161 seat means 163 is obtained inside which appendage means 164 is received that projects from the body 159.

Between wall means 165, superiorly delimiting the seat means 163 and the appendage means 164 spring means 166 is provided.

From the body 159 a stem extends that exits the chamber 160 through a hole 167 to interact with a movable member 73 of a linear actuator 72.

In operation, the linear actuator 72, through the movable member 73, transfers the female half mould 4a from the open configuration X to the closed configuration Y, overcoming the resistance of the spring means 166.

Subsequently, the pressurised air, inserted inside the chamber 160 through the conduit means 162, generates a thrust on the body 159 in such a way as to maintain the female half mould 4a in the closed configuration Y, even when the movable member 73 is returned by the linear actuator 72.

At the end of the moulding and shape stabilising steps, the pressurised air is evacuated from the chamber 160 through the conduit means 162, enabling the female half mould to assume the open configuration X through the action of the spring means 165.

It is noted that alternatively to the chamber 66, or in addition to the chamber 66, a further chamber can be provided between the movable member 73 and the female half mould 4a.

It is thus possible to provide an apparatus 2 comprising a number of linear actuators 72 corresponding to the number of further carousels 6, each linear actuator 72 being fixed to the carousel 5 and driving the moulds 4 of a corresponding further carousel 6.

In the case disclosed above the further carousels 6 can be angularly indexed in relation to the carousel 5.

Alternatively, a linear actuator 72 can be provided arranged in a fixed position in relation to the carousel 5 and arranged for driving in succession all the moulds 4 installed on the further carousels 6. In this case, it is possible to provide a further linear actuator arranged at a certain angular distance from the linear actuator 72. The position of the further linear actuator in relation to the linear actuator 72 is chosen on the basis of the duration and manner of the technological process that occurs on the carousel 5.

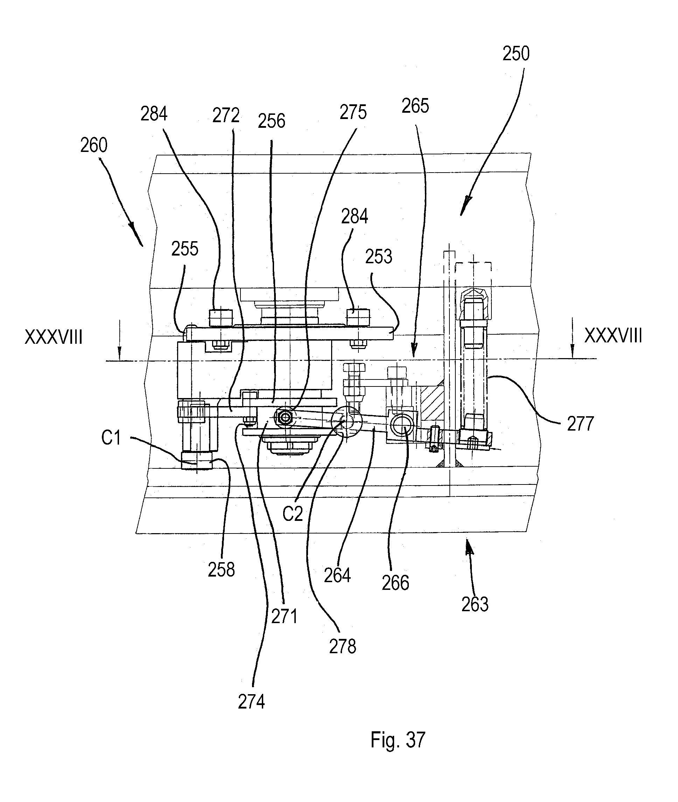

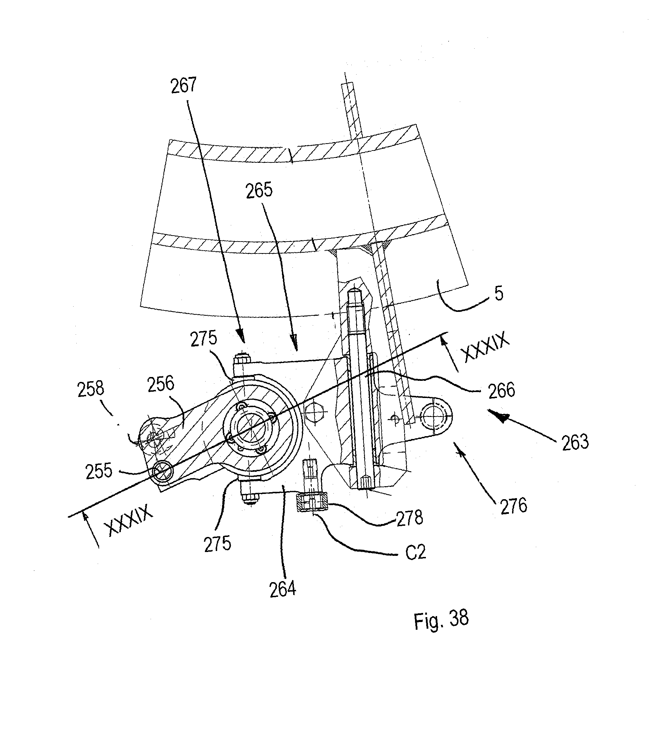

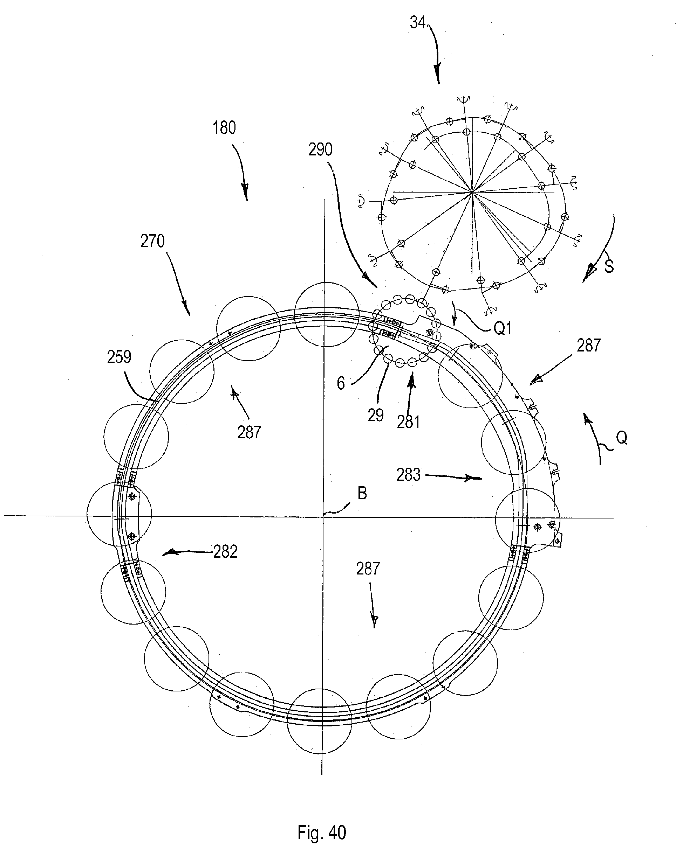

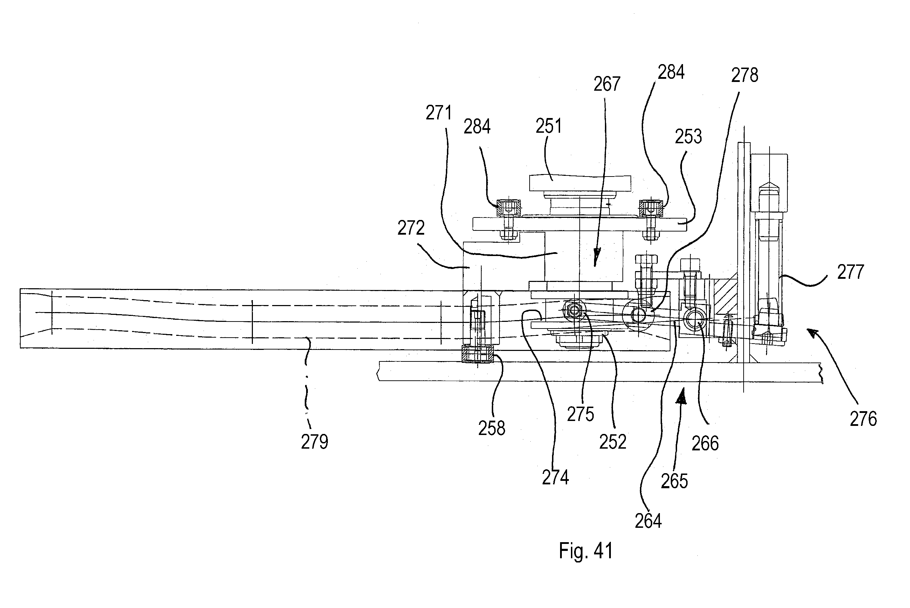

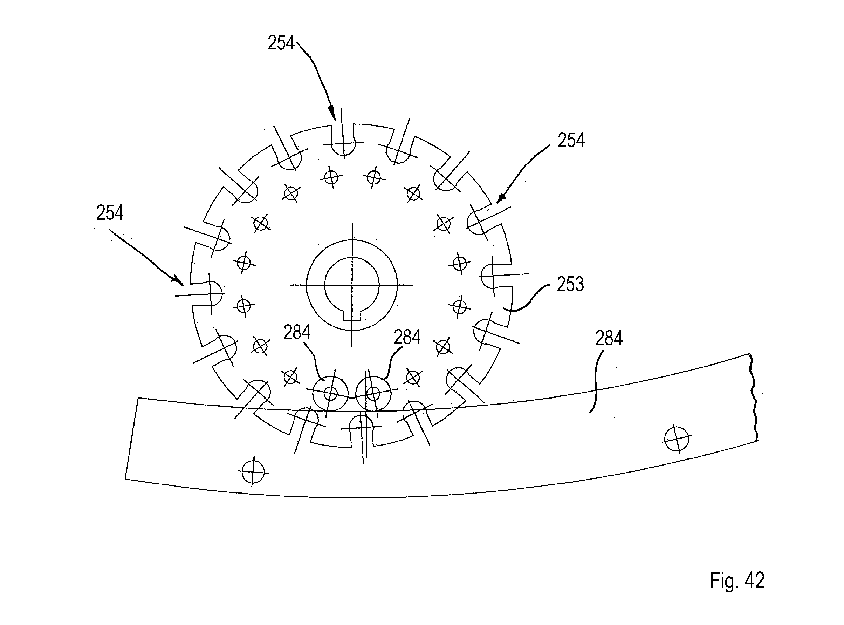

With reference to Figures 37 to 42 driving means 250 is shown that is arranged for rotating the further carousels 6 in relation to the carousel 5.

The driving means 250 comprises first driving means 260 associated with each of the further carousels 6 and second driving means 270 arranged in a fixed position in relation to the carousel 5 and to the further carousels 6 and suitable for interacting with the first driving means 260.

Each further carousel 6 is provided with a shaft 251 rotatably supported on the carousel 5 and provided with an end 252 that protrudes from the carousel 5.

The first driving means 260 comprises a disc element 253 fixed to the shaft 251.

On the periphery of the disc element 253 a plurality of slots 254 is obtained that are arranged in such a way as to be substantially angularly equidistant.

The first driving means 260 furthermore comprises a pivot 255 arranged for engaging, one after the other, the slots 254, in the manner that will be explained in greater detail below.

The first driving means 260 furthermore comprises a supporting body 256 provided with a sleeve 271 centrally provided with a hole 257 shaped in such a way as to enable the sleeve 271 to surround a portion of the end 252 of the shaft 251.

To the sleeve 271 an appendage 272 is fixed that supports the pivot 255.

Between the end 252 and the supporting body 256 a bearing is interposed 262.

In this way, the supporting body 256 can rotate in relation to the shaft 252 around the further rotation axis C.

On the appendage 272 a rolling element 258 is rotationally supported that is rotatable around the axis C1 substantially parallel to the further rotation axis C, the axis C1 and the further rotation axis C being positioned at a preset distance from each other.

The second driving means 270 comprises a cam element 259, obtained in a base of the apparatus 2, which cam element 259 remains stationary during rotating of the carousel 5 and is engaged by the rolling element 258.

The cam element 259 is shaped in such a way as to give the supporting body 256, by the rolling element 258, a rotation around the further rotation axis C, in the manner that will be disclosed below.

The cam element 259 comprises a loop groove 286 provided with a first active cam portion 281 of a second active cam portion 282 and a third active cam portion 283 - having suitable shaped profiles - connected together by connecting portions 287 that are shaped as arcs of a circumference.

The cam element 259 is positioned in such a way that the rotation axis B of the carousel 5 passes through the centre of the aforementioned circumference.

The rolling element 258, when engaging the connecting portions 287, travels along a circular trajectory - i.e. keeps at a constant distance from the rotation axis B - and does not therefore cause the supporting body 256 to rotate around the further rotation axis C.

The rolling element 258, when engaging the first active cam portion 281, the second active cam portion 282 or the third active cam portion 283, is caused to vary the distance thereof from the rotation axis B, in such a way as to rotate the supporting body 286 around the further axis C by angles of preset amplitude.

In other words, during operation, the rolling element 258 constantly engages the cam element 259.

The supporting body 256, nevertheless, rotates only when the rolling element interacts with the first active cam portion 281, with the second active cam portion 282 and with the third active cam portion 283.

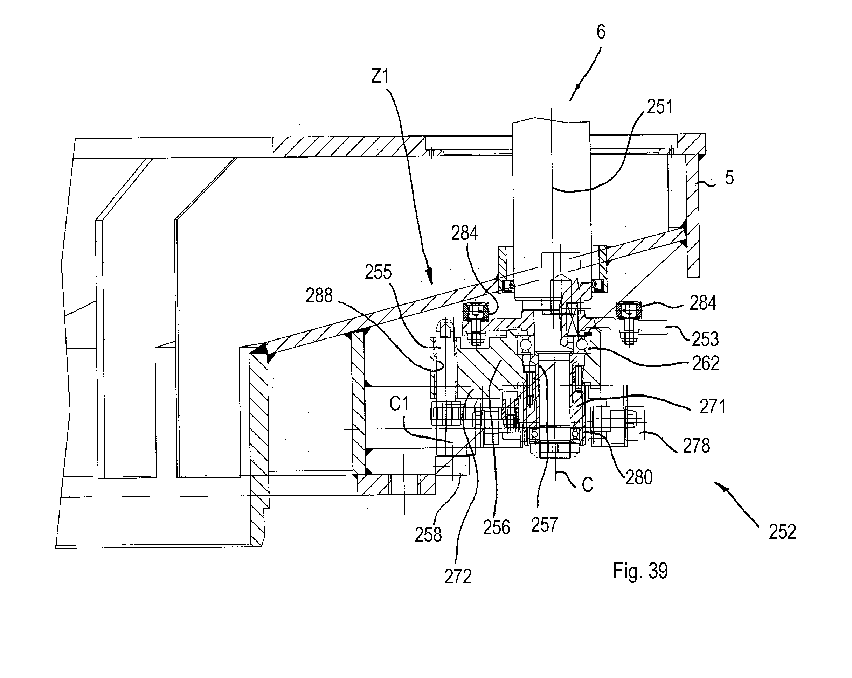

The pivot 255 can assume a first operational configuration, indicated by Z1 in Figure 39, in which the pivot 255 engages one of the slots 254, and a second operational configuration, which is not shown, in which the pivot 255 does not interact with the slots 254.

The supporting body 256 is provided with a seat 288 that guides the pivot 255 whilst the latter shifts from the first operational configuration Z1 to the second operational configuration, and vice versa.

When the pivot 255 is in the first operational configuration Z1, the disc element 253 is fixed to the supporting body 256.

In this case, the supporting body 256, rotated around the further axis C by the rolling element 258, makes in turn the shaft 251 rotate.

When the pivot 255 is in the second operational configuration, the supporting body 256 and disc element 253 are not coupled together.

In this case, a rotation of the supporting body 256 does not involve a corresponding rotation of the shaft 251.

The first driving means 260 furthermore comprises controlling means 263 arranged for transferring the pivot 255 from the first operational configuration Z1 to the second operational configuration, and vice versa.

The controlling means 263 comprises a lever 264 hinged at a central portion 265 thereof to the carousel 5 by pivot means 266.

The lever 264 comprises an end portion 267 in which a receptacle 268 is obtained that is arranged for partially enveloping a zone 273 of the sleeve 272 in which a cavity 274 is peripherally obtained.

From opposite ends of the receptacle 268 two wheels 275 protrude that are rotatably supported by the end portion 267 in such a way as to be received in the cavity 274.

The lever 264 furthermore comprises a further end portion 276 with which a spring 277 is associated that causes the rod 264 to rotate around the pivot means 266 to maintain the pivot 255 in the first operational configuration Z1.

The first driving means 260 comprises a further rolling element 278 rotatably supported by the lever 264, the further rolling element rotating around further axis C2 arranged substantially perpendicularly in relation to the further rotation axis C.

The second driving means 270 comprises a further cam element 279, obtained in the base of the apparatus 2, that remains stationary during rotation of the carousel 5 and which is engaged by the further rolling element 278.

The further cam element 279 is shaped in such a way as to cause the lever 264 to oscillate in relation to the pivot means 266 so as to cause the sleeve 271 to slide on the end 252, between the sleeve 271 and the end 252 there being provided slide-promoting means comprising a bush 280.

Operation of the driving means 250 is disclosed below with particular reference to the case of a cooling carousel 180, shown in Figure 24.

Naturally, this operation is identical in the case of an apparatus 2 suitable for being used in a different context.

In operation, the pivot 255 is received in a slot 254, in such a way that the disc 253 is firmly connected to the supporting body 256.

The rolling element 258 engages the cam element 259.

During a first rotating step of the carousel 5, the rolling element 258, by interacting with the first active cam portion 281, causes the further carousel 6 to rotate in relation to the carousel 5 by a preset amplitude.

The first active cam portion 281 is positioned near to the zone 290 in which the cooling carousel 180 interacts with the moving wheel 34 to enable the moving wheel 34 to insert a preform 28 inside a cooling device 29.

In particular, the first active cam portion 281 is positioned upstream of the zone 290 in relation to the rotating direction Q.

As shown above, as the further rotating direction Q1 of the further carousel 6 is opposite the rotating direction Q of the carousel 5, it is possible to obtain an increase of the time during which each removing arm 35 can interact with a respective cooling device 29, so that a preform 28 can be delivered to the cooling carousel 180 in an easier manner.

Subsequently, during a further rotating step of the carousel 5, the rolling element 258, by interacting with the second active cam portion 282, causes the further carousel 6 to further rotate in relation to the carousel 5 by a preset amplitude.

The sum of the aforementioned rotating and of the aforementioned further rotating correspond to one angular step of the further carousel 6, said angular step having an amplitude of 360°/n, where n is the number of cooling devices 29 installed on each further carousel 6.

Subsequently, during a still further rotating step of the carousel 5, the further cam element 279, positioned near to the third active cam portion 283, causes the lever 264 to rotate in relation to the pivot means 266, against the resistance of the spring 277, to take the pivot 255 to the second operational configuration.

Further wheels 284, rotatably supported by the disc element 253, interact with a track 285 that remains stationary during rotation of the carousel 5 to prevent the further carousel 6 rotating around the further rotation axis C.

Subsequently, the rolling element 258, by interacting with the third active cam portion 283, causes the supporting body 256 to rotate in relation to the disc element 253 until the pivot 255 is aligned on the further slot 264.

At this point, the further rolling element 278, by interacting with the further cam element 279, returns the pivot to the first operational configuration Z1 in such a way that the pivot 255 engages the further slot 264.

The first active cam portion 281 and the second active cam portion 282 cause the supporting body 256, and the pivot 255 fixed thereto, to rotate around the further axis C in the further rotating direction Q1.

The third active cam portion 283 causes the supporting body 256, and the pivot 255 fixed thereto, to rotate around the further rotation axis C in a still further rotating direction, opposite the further rotating direction Q1, in such a way that the pivot 255 penetrates inside the slots 264 in a fixed position in relation to the carousel 5.

Similarly, the further cam element 279 is shaped in such a way that the pivot 255 disengages from the slots 264 in a further position that is fixed in relation to the carousel 5, this further position being different from the aforementioned position.

As a result, during a complete rotation of the carousel 5, the pivot 255 - maintained in the first operational configuration Z1 - performs a rotation, in the further rotating direction Q1, between the aforementioned position and the aforementioned further position, driving by one angular step the further carousel 6. The pivot 255 - kept in the second operational configuration - furthermore performs a further rotation, in the still further rotating direction, to return from the aforementioned further position to the aforementioned position.

The pivot 255, driven by the further cam element 279 by the controlling means 263, cooperates with the disc element 253 to define an escapement mechanism that enables the further carousels 6 to be indexed.

This enables a very reliable apparatus to be obtained.

It is furthermore possible to obtain a cheaper apparatus in relation to cases in which each further carousel is equipped with dedicated motor means.

In a version that is not shown, the cam element comprises only two active cam portions.

An active cam portion that shifts the pivot 255 from the aforementioned position to the aforementioned further position and a further active cam portion that returns the pivot 255 from the aforementioned further position to the aforementioned position.

## Claims

1. Method comprising providing a rotatable carousel (5) and rotating said carousel (5), wherein during said rotating arranging an object (16; 28; 40) in a conveying unit (170) is provided, said conveying unit (170) being associated with said carousel (5) and movable in relation to said carousel (5), and further arranging a further object (16; 28; 40) in a further conveying unit (170) is provided, said further conveying unit (170) being associated with said carousel (5) and movable in relation to said carousel (5), said arranging comprising positioning a first object (16; 28; 40) in a first operating element (4; 29; 58) of a plurality of operating elements associated with said conveying unit (170) and said further arranging comprising further positioning a further first object (16; 28; 40) in a further first operating element (4; 29; 58) of a further plurality of operating elements associated with said further conveying unit (170), after said arranging, moving said conveying unit (170) being provided, after said moving associating a second object (16; 28; 40) to a second operating element (4; 29; 58) of said plurality of operating elements being provided.

2. Method according to claim 1, wherein said moving comprises advancing by one step said conveying unit (170).

3. Method according to claim 1, or 2, wherein said associating occurs after said carousel (5) has made a complete rotation around a rotation axis (B) thereof.

4. Method according to any one of claims 1 to 3, wherein, after said positioning, maintaining said first object (16; 28; 40) in said first operating element (4; 29; 58) is provided while said carousel (5) performs a number of rotations around a rotation axis (B) thereof, said number of rotations being equal to the number of operating elements of said plurality of operating elements.

5. Method according to any one of claims 1 to 4, wherein before said arranging removing an object (16; 28; 40) from said first operating element (4; 29; 58) is provided.

6. Method according to any one of claims 1 to 5, wherein, after said further arranging, further moving said conveying unit (170) is provided.

7. Method according to claim 6, wherein said further moving comprises further advancing by one step said conveying unit (170).

8. Method according to claim 6, or 7, wherein after said further moving further associating a further second object (16; 28; 40) with a further second operating element (4; 29; 58) of said further plurality of operating elements is provided.

9. Method according to claim 8, wherein said further associating occurs after said carousel (5) has finished a complete rotation around a rotation axis (B) thereof.

10. Method according to any one of claims 1 to 9, wherein after said further positioning further maintaining said further first object (16; 28; 40) in said further first operating element (4; 29; 58) is provided while said carousel (5) performs a number of rotations around a rotation axis (B) thereof, said number of rotations being equal to the number of operating elements of said further plurality of operating elements.

11. Method according to any one of claims 1 to 10, wherein before said further arranging removing an object (16; 28; 40) from said further first operating element (4; 29; 58) is provided.

12. Method according to any one of claims 1 to 11, wherein said rotating comprises rotating in a continuous manner said carousel (5).

13. Method according to any one of claims 1 to 12, wherein said conveying unit (170) and said further conveying unit (170) comprises, respectively, a further carousel (6) and a still further carousel (6) rotatably supported on said carousel (5).

14. Method according to any one of claims 1 to 13, wherein said arranging and said further arranging comprise distributing to said carousel (5) doses of plastics (40) in pasty state.

15. Method according to claim 14, and further comprising moulding by compression said doses of plastics (40).

16. Method according to any one of claims 1 to 13, wherein said arranging and said further arranging comprise distributing to said carousel (5) objects to be thermally conditioned.

17. Method according to claim 16, wherein said distributing comprises delivering to said carousel (5) preforms (28) of containers, said preforms (28) being made of plastics.

18. Method according to any one of claims 1 to 13, wherein said arranging and said further arranging comprise distributing containers to be filled to said carousel (5).

19. Method according to claim 18, and further comprising filling said containers while said containers are supported by said carousel (5).

20. Method according to any one of claims 1 to 13, wherein said arranging and said further arranging comprise distributing containers to be sealed to said carousel (5).

21. Method according to claim 20, and further comprising sealing said containers while said containers are supported by said carousel (5).

22. Method according to claim 21, wherein said sealing comprises applying cap means to said containers to close opening means of said containers.

23. Method according to any one of claims 1 to 13, wherein said arranging and said further arranging comprise distributing objects to which labels have to be applied to said carousel (5).

24. Method according to claim 23, and further comprising applying said labels to said objects while said containers are supported by said carousel (5).

25. Method according to any one of claims 1 to 13, wherein said arranging and said further arranging comprise distributing objects to be decorated to said carousel (5).

26. Method according to any one of claims 1 to 13, wherein said arranging and said further arranging comprise supplying to said carousel (5) plastics to be injection-compression moulded.

27. Method according to any one of claims 1 to 13, wherein said arranging and said further arranging comprise distributing preforms of containers to be blow-moulded to said carousel (5).
